(19) Europäisches Patentamt / European Patent Office / Office européen des brevets

(11) **EP 3 832 258 A1**

(12) **EUROPEAN PATENT APPLICATION**
published in accordance with Art. 153(4) EPC

(43) Date of publication:
**09.06.2021 Bulletin 2021/23**

(51) Int Cl.:
**G01C 15/00** (2006.01)   **G01C 15/06** (2006.01)
**G01D 5/347** (2006.01)

(21) Application number: **19844618.9**

(22) Date of filing: **26.07.2019**

(86) International application number:
**PCT/JP2019/029426**

(87) International publication number:
**WO 2020/026980 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **01.08.2018 JP 2018144786**

(71) Applicant: TOPCON CORPORATION
Tokyo 174-8580 (JP)

(72) Inventor: **YASUTOMI, Satoshi**
**Tokyo 174-8580 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ANGLE DETECTION SYSTEM AND ANGLE DETECTION METHOD**

(57)    Provided is a technique capable of measuring an angle of a remote measuring object. An angle detection system (90) includes an encoder pattern portion (13) to be attached to a measuring object (14), and a surveying instrument (50). The encoder pattern portion (13) includes a columnar base (13A) and an encoder pattern (13B) provided on an outer circumferential surface of the base (13A) and representing an angle in a circumferential direction with respect to a predetermined reference direction, the encoder pattern (13) includes a reflective material layer (120) retroreflecting incident light and an encoder pattern layer (130) disposed on a front surface of the reflective material layer (120), the encoder pattern layer (130) includes a combination of a first polarization filter (130a) configured to transmit a polarization component in a first direction, and a second polarization filter (130b) configured to transmit a polarization component in a second direction different from the first direction, and the surveying instrument (50) includes a reading light transmission unit (69) configured to output reading light toward the encoder pattern (13B), an information acquiring unit (55) configured to optically acquire information represented by the encoder pattern (13B), an arithmetic control unit (64) configured to calculate an angle ($\theta_T$) of the surveying instrument (50) with respect to the reference direction based on the information, and a first or second polarization filter (55B) disposed on an optical path of light to be output from the reading light transmission unit (69), reflected by the encoder pattern (13B), and enter a light receiving surface of the information acquiring unit (55).

FIG. 1

**Description**

TECHNICAL FIELD

The present invention relates to an angle detection system and an angle detection method, more specifically, to an angle detection system and an angle detection method to be used for a survey.

BACKGROUND

Conventionally, an absolute encoder has been known as an angle detecting device for measuring an absolute angle (refer to, for example, Patent Literature 1). The absolute encoder incorporates a disc with graduated patterns such as slits according to the gray code rule or an M-sequence code, that is, a so-called absolute encoder pattern. An image of light irradiated on the slits is received by an image sensor, etc., and from the image obtained by the image sensor, an angular position is calculated.

Such an angle detecting device as above measures an angular position corresponding to a rotational displacement of an input shaft connected coaxially to the disc. Therefore, it is necessary to directly attach an angle detecting device main body including the disc, a light emitting element, a light receiving element, and a control unit to a measuring object and make a measurement.

Citation List

Patent Literature

Patent Literature 1 Japanese Published Unexamined Patent Application No. H05-172588

SUMMARY OF INVENTION

Technical Problem

However, at a survey site, there is a case in which measurement of an angle of a remote measuring object is desired. For example, at a construction site, etc., there is a case where a member such as a steel frame is desired to be remotely manipulated and installed in a designated direction. Therefore, a proposal for an angle detecting device capable of measuring an angle of a remote measuring object has been demanded.

The present invention was made in view of these circumstances, and an object thereof is to provide a technique capable of making a measurement of an angle of a remote measuring object.

Solution to Problem

In order to achieve the object described above, an angle detection system according to an aspect of the present invention is an angle detection system including an encoder pattern portion to be attached to a measuring object, and a surveying instrument, wherein the encoder pattern portion includes a columnar base and an encoder pattern provided on an outer circumferential surface of the base and representing an angle in a circumferential direction with respect to a predetermined reference direction, the encoder pattern includes a reflective material layer retroreflecting incident light and an encoder pattern layer disposed on a front surface of the reflective material layer, the encoder pattern layer includes a combination of a first polarization filter configured to transmit a polarization component in a first direction, and a second polarization filter configured to transmit a polarization component in a second direction different from the first direction, and the surveying instrument includes a reading light transmission unit configured to output reading light toward the encoder pattern, an information acquiring unit configured to optically acquire information represented by the encoder pattern, an arithmetic control unit configured to calculate an angle ($\theta_T$) of the surveying instrument with respect to the reference direction based on the information, and a first or second polarization filter disposed on an optical path of light to be output from the reading light transmission unit, reflected by the encoder pattern, and enter a light receiving surface of the information acquiring unit.

In the aspect described above, it is also preferable that the angle information portion represents a bit pattern by disposing the first and second polarization filters in the circumferential direction on the outer circumferential side surface of the encoder pattern portion, and the arithmetic control unit reads the optically acquired information in the circumferential direction of the encoder pattern, converts the reading result into a bit pattern, identifies a center position of the encoder pattern from the reading result, and calculates an angle by comparing the bit pattern included in a predetermined region centered at the center position with the correlation between bit pattern and angle set in advance.

In the aspect described above, it is also preferable that the angle information portion is a barcode-like pattern formed by disposing the first polarization filter as vertical lines with two wide and narrow widths in the circumferential direction so as to represent a bit pattern generated by an M-sequence, and disposing the second polarization filter between the vertical lines.

In the aspect described above, it is also preferable that the reflective material layer is configured by disposing first and second reflective materials with different reflectances in the circumferential direction, and a bit pattern is represented by combinations of the first and second polarization filters and the first and second reflective materials.

In the aspect described above, it is also preferable that the information acquiring unit is a camera configured to acquire information represented by the encoder pattern as an image.

In the aspect described above, it is also preferable that the information acquiring unit is a scanner configured to acquire information represented by the encoder pattern as a received light amount distribution by transmitting scanning light to the encoder pattern and receiving reflected light from the encoder pattern.

In the aspect described above, it is also preferable that the measuring object is attached at a predetermined angle ($\theta_B$) in the circumferential direction with respect to the reference direction, and the arithmetic control unit calculates an angle of the measuring object with respect to the surveying instrument based on the predetermined angle ($\theta_B$) and a read angle ($\theta_T$) of the encoder pattern.

An angle detection method according to another aspect of the present invention is a method for detecting an angle by using an encoder pattern portion including a columnar base and an encoder pattern disposed on an outer circumferential surface of the base and representing an angle in a circumferential direction with respect to a predetermined reference direction, and a surveying instrument including an information acquiring unit, and includes (a) a step of attaching the encoder pattern portion to the measuring object at a predetermined angle in the circumferential direction of the encoder pattern portion, (b) a step of outputting reading light toward the encoder pattern, (c) a step of optically acquiring information represented by the encoder pattern by the information acquiring unit, and (d) a step of operating a direction angle of the surveying instrument with respect to the reference direction based on information acquired through the step (c), wherein the encoder pattern includes a reflective material layer retroreflecting incident light and an encoder pattern layer disposed on a front surface of the reflective material layer, the encoder pattern layer includes a combination of a first polarization filter configured to transmit a polarization component in a first direction, and a second polarization filter configured to transmit a polarization component in a second direction different from the first direction, and the surveying instrument includes a first or second polarization filter disposed on an optical path of light to be output from the reading light transmission unit, reflected by the encoder pattern, and enter the information acquiring unit.

In this description, the term "encoder pattern" includes a pattern having angle information with a reference angle set to 0°, and detectable by polarization.

In this present description, the term "reference direction of the encoder pattern" means a direction of a reference point (0°) of the encoder pattern.

In this description, the term "angle of the surveying instrument in the circumferential direction with respect to the reference direction of the encoder pattern" means "an angle of a straight line connecting the center of the encoder pattern portion and the surveying instrument with respect to the direction of 0° of the encoder pattern," and this angle is the "read angle of the encoder pattern" obtained by reading the encoder pattern.

Benefit of Invention

According to the configuration described above, an angle of a remote measuring object can be measured.

BRIEF DESCRIPTION OF DRAWINGS

FIG. 1 is a configuration block diagram of an angle detection system according to a first embodiment of the present invention and a survey system including this angle detection system.

FIG. 2 is an external schematic view of the survey system including the angle detection system of the same embodiment.

FIG. 3 is a perspective view of a measurement module relating to the survey system described above. FIG. 4A is an enlarged perspective view of an encoder pattern portion relating to the angle detection system of the same embodiment, FIG. 4B is a view illustrating a cross-section structure of the encoder pattern portion, and FIG. 4C is a view of an encoder pattern of the encoder pattern portion, cut and open at a reference point and developed into a plane (partially omitted).

FIGS. 5A to 5C are views describing a method for manufacturing the encoder pattern portion of the angle detection system of the same embodiment.

FIG. 6 is a plan view of the measurement module described above.

FIGS. 7A to 7C are diagrams illustrating examples of a configuration of a camera of the angle detection system of the same embodiment, and FIG. 7C is a diagram including a reading light transmission unit.

FIG. 8 is a flowchart of an operation for measuring a measurement point by the survey system described above.

FIG. 9 is a flowchart of angle detection using the angle detection system of the same embodiment.

FIG. 10A illustrates a landscape image around the encoder pattern portion acquired by a camera of the angle detection system of the same embodiment, FIG. 10B is an enlarged image of the encoder pattern portion cut out from FIG. 10A, and FIG. 10C is a graph illustrating results obtained by linearly reading FIG. 10B in the circumferential direction and converting the reading results into pixel values.

FIGS. 11A and 11B are diagrams describing a positional relationship between a reflection target and a measurement point in a case where the measurement point not in sight is measured by using the survey system described above.

FIG. 12 is a perspective view of an encoder pattern according to a modification of the angle detection system of the present embodiment.

FIG. 13 is a configuration block diagram of an angle detection system according to a second embodiment of the present invention, and a survey system including this angle detection system.

FIG. 14 is a block diagram illustrating a configuration of a scanner of the same angle detection system.

FIG. 15 is a flowchart of angle detection using the same angle detection system.

FIG. 16A is a diagram describing a scanning direction of the same angle detection system, and FIG. 16B is a graph illustrating a received light amount distribution obtained by scanning.

FIG. 17 is a configuration block diagram of an angle detection system according to a third embodiment of the present invention, and a survey system including this angle detection system.

FIG. 18 is a flowchart of angle detection using the angle detection system according to the same embodiment.

FIGS. 19A to 19C are diagrams describing a reading direction by a camera of the same angle detection system.

FIGS. 20A to 20D are diagrams describing an encoder pattern of an angle detection system according to a fourth embodiment of the present invention, and FIG. 20A illustrates an encoder pattern layer, FIG. 20B illustrates a reflective material layer, and FIG. 20C illustrates a cross-section structure of the encoder pattern portion. FIG. 20D is a diagram illustrating results of conversion of an image corresponding to the encoder pattern portion illustrated in FIG. 20C into pixel values.

FIGS. 21A to 21D are diagrams describing an encoder pattern of an angle detection system according to a fifth embodiment of the present invention, and FIG. 21A illustrates an encoder pattern layer, FIG. 21B illustrates a reflective material layer, and FIG. 21C illustrates a cross-section structure of the encoder pattern portion. FIG. 21D is a diagram illustrating results of conversion of an image corresponding to the encoder pattern portion illustrated in FIG. 21C into pixel values.

DESCRIPTION OF EMBODIMENTS

Preferred embodiments of the present invention are described with reference to the drawings. In the following description of the embodiments, the same components are provided with the same reference signs, and overlapping description is omitted. In each drawing, components are enlarged and schematically illustrated as appropriate for convenience of description, and which may not reflect actual ratios.

1. First Embodiment

1-1. Configuration of angle detection system

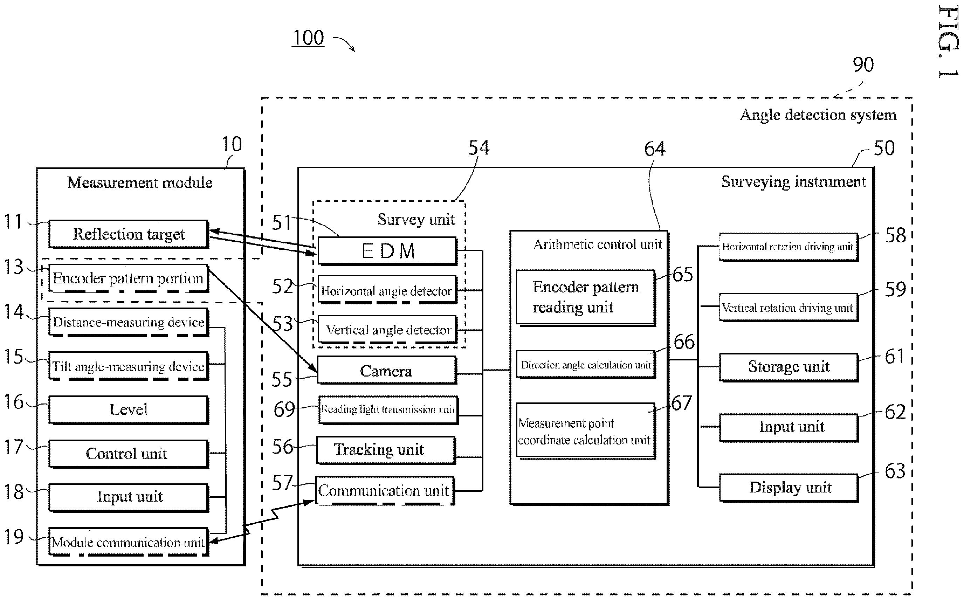

A configuration of an angle detection system 90 according to a first embodiment is described with reference to FIGS. 1 to 4. The angle detection system 90 is provided in a survey system 100. The survey system 100 includes a measurement module 10 and a surveying instrument 50. The angle detection system 90 is a system for measuring an angle of a distance-measuring device 14 as a measuring object, and includes an encoder pattern portion 13 of the measurement module 10 and the surveying instrument 50.

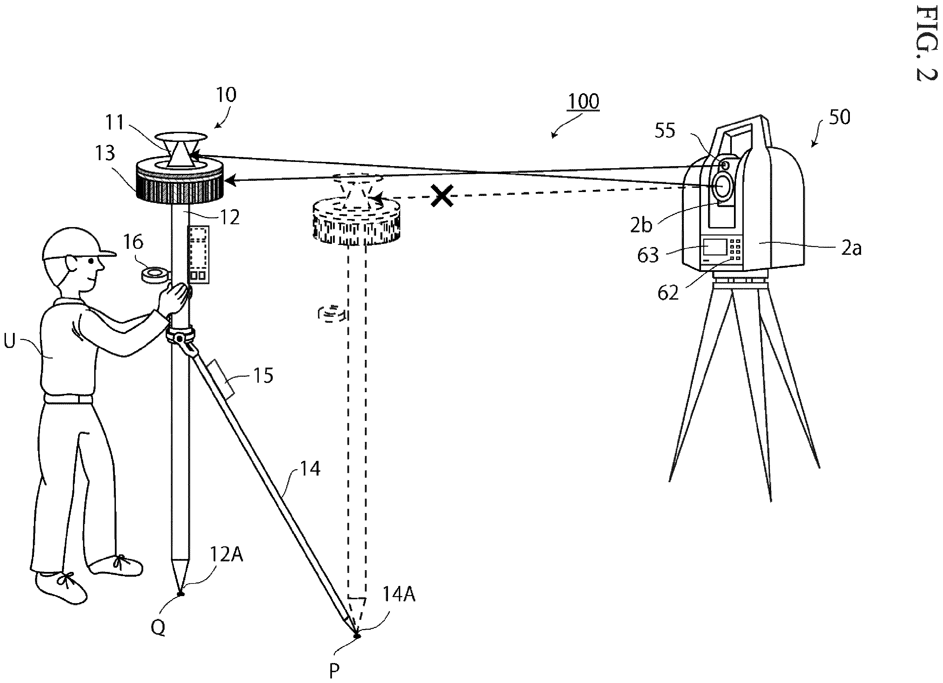

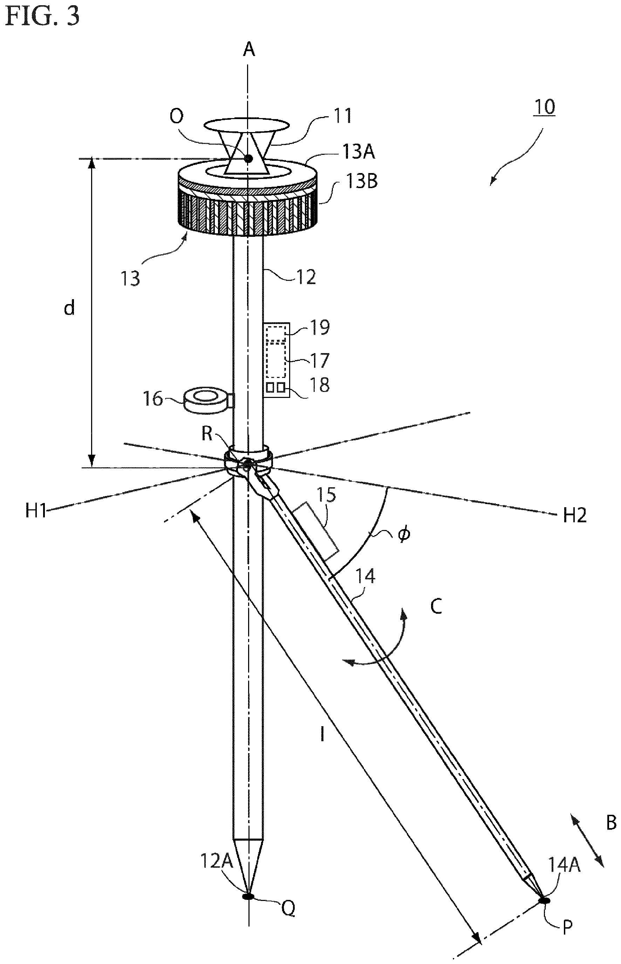

The survey system 100 is a system for surveying a measurement point P not in sight from the surveying instrument 50. As illustrated in FIGS. 2, 3, when measuring a measurement point P not in sight from the surveying instrument 50, a point Q in sight from the surveying instrument 50 is set as a temporary measurement point, and a vertical state of a support member 12 is secured while a tip end 12A of the support member 12 is brought into contact with the point Q, and the distance-measuring device 14 is extended or contracted in the direction of the double-headed arrow B to bring a tip end 14A into contact with the measurement point P, and measures the reflection target 11.

As illustrated in FIGS. 2, 3, the measurement module 10 includes the support member 12 for supporting the reflection target 11, the encoder pattern portion 13, the distance-measuring device 14, a tilt angle-measuring device 15, a level 16, a control unit 17, an input unit 18, and a module communication unit 19 are attached.

The reflection target 11 is a so-called 360-degree prism configured by, for example, radially combining a plurality of triangular pyramid prisms, and reflects light made incident from its entire circumference (360°) toward directions opposite to the incident directions. That is, the reflection target 11 reflects distance measuring light from the surveying instrument 50 toward the surveying instrument 50. The reflection target 11 is not limited to the 360-degree prism, and a normal prism to be used for a survey may be used.

The support member 12 is a pole extending for a certain length, and fixes and supports the reflection target 11 so that the central axis A of the support member 12 passes through the center O of the reflection target 11.

The encoder pattern portion 13 is configured by providing an encoder pattern 13B on a side circumferential surface of a short-length columnar base 13A.

The base 13A is, for example, a molded body made of a metal or a resin. The base 13A is fixed between the support member 12 and the reflection target 11 so as to become coaxial with the central axis A of the support member 12 by a means such as screw-fitting of a screw portion (not illustrated) formed on an outer circumference of the support member 12 and a screw hole (not illustrated) formed at the center of the base 13A. Therefore, the encoder pattern portion 13 is attached to the distance-measuring device 14 that is a measuring object via the support member 12.

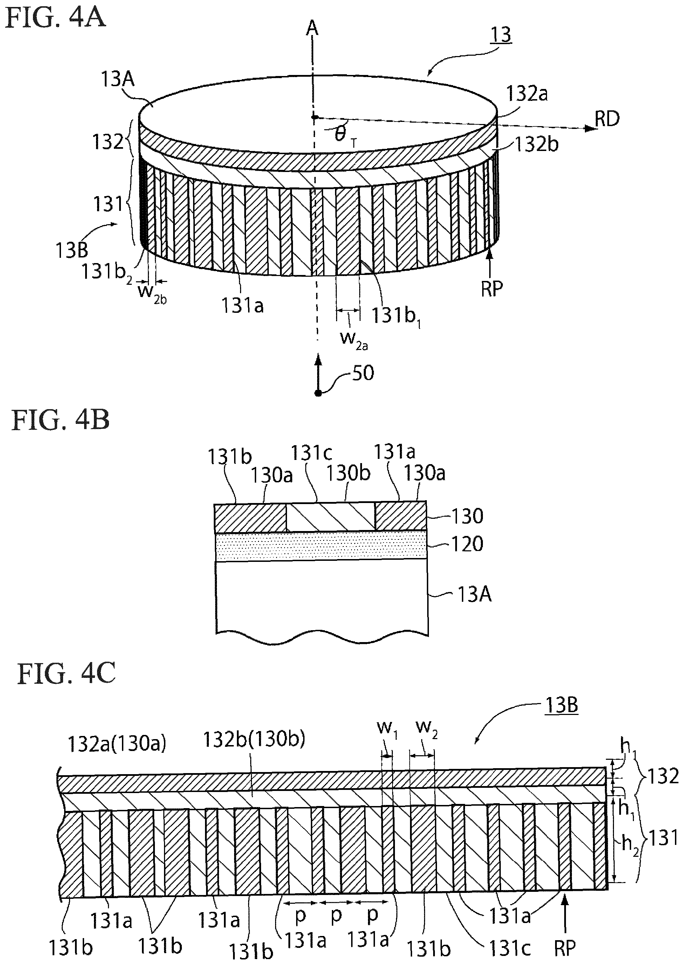

In FIGS. 4, the encoder pattern 13B includes an angle information portion 131 representing angle information, and a width information portion 132 adjacent to and above the angle information portion 131 and representing a width of the encoder pattern portion.

FIG. 4B illustrates a cross-section structure of an outer circumferential side surface of the encoder pattern portion 13. The encoder pattern portion 13 includes, in the cross-section structure, a reflective material layer 120 disposed on the outer circumferential side surface of the base 13A, and an encoder pattern layer 130 disposed on the reflective material layer 120.

The reflective material layer 120 is a reflective substance layer containing, for example, a reflection film, glass beads, or synthetic resin, and having properties for retroreflecting incident light toward a light source. In detail, a publicly known reflection sheet of a reflection prism type, a sealed lens type, or a prism lens type, available on the market, can be used as the reflective material layer.

The encoder pattern layer 130 is a layer forming a pattern corresponding to angle information and width information by combinations of two kinds of polarization filters including a first polarization filter 130a that transmits a polarization component in a first direction and attenuates the other components, and a second polarization filter 130b that transmits a polarization component in a second direction different from the first direction and attenuates the other components. Here, the second direction is preferably a direction orthogonal to the first direction, however, the second direction is not limited to this.

As a material of the polarization filters, for example, a polarization film prepared by adsorbing and orienting iodine compound molecules to a polyvinyl alcohol (PVA) film can be used.

A pattern of the angle information portion 131 is described. As an example, as illustrated in FIG. 4C, the angle information portion 131 is formed by setting narrow-width vertical lines 131a with a width $w_1$ and wide-width vertical lines 131b with a width $w_2$ by defining the vertical lines 131a as "0" and the vertical lines 131b as "1" to generate an M-sequence recurring random number code, and disposing the first polarization filter 130a at portions corresponding to the vertical lines 131a and 131b, and the second polarization filter 130b between the vertical lines to generate a barcode-like pattern including the vertical lines disposed at equal pitches p. One round is set to be less than one period of the recurring random numbers.

The encoder pattern portion 13 is configured so that, by setting a direction (hereinafter, referred to as "reference direction of the encoder pattern") RD from the center of the encoder pattern portion 13 to the reference point RP as 0°, an angle (hereinafter, referred to as "read angle of the encoder pattern") calculated from a pattern read by the surveying instrument 50 corresponds to an angle $\theta_T$ of the surveying instrument 50 in the circumferential direction with respect to the reference direction RD, that is, an absolute angle between the reference direction RD and a straight line connecting the surveying instrument 50 and the central axis A of the encoder pattern portion.

The angle information portion 131 is configured to realize a desired resolution by changing a bit number of the angle information portion 131.

The bit pattern is not limited to a bit pattern using the M-sequence code, and a bit pattern using a gray code or a pure binary code, etc., can also be used, and these can be generated by a publicly known method. However, the use of an M-sequence code is advantageous because it enables an increase in bit number without increasing the number of tracks, and realizes high resolution by a simple configuration.

On the other hand, the width information portion 132 includes a first zone 132a with a predetermined height $h_1$ and a second zone 132b with the same height. The first zone 132a and the second zone 132b respectively consist of a first polarization filter 130a and a second polarization filter 130b. The first zone 132a and the second zone 132b respectively extend across the entire circumference in the circumferential direction of the encoder pattern portion 13 and represent a width of the encoder pattern portion 13 when observed laterally.

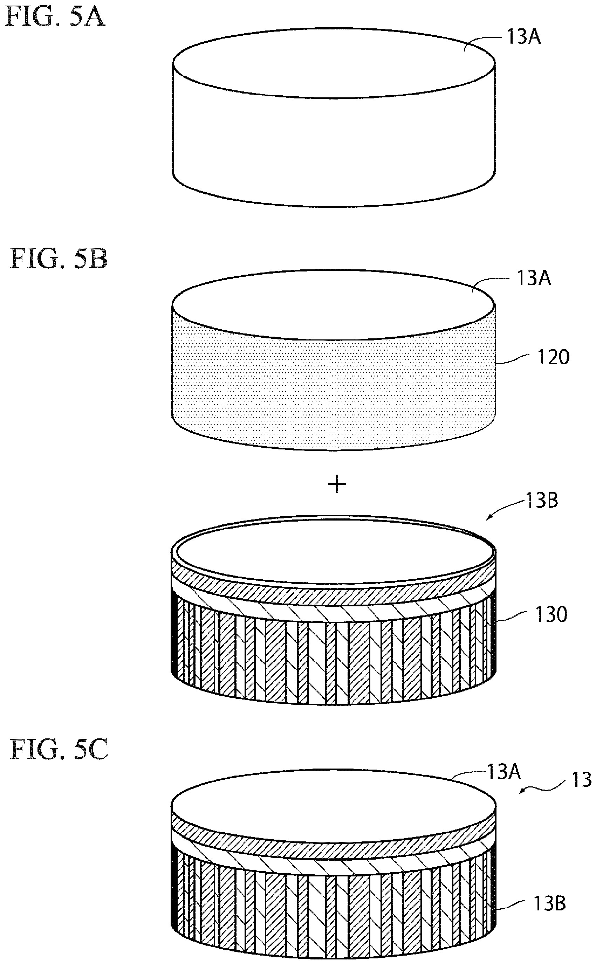

The encoder pattern portion 13 is manufactured as illustrated in FIGS. 5A to 5C.

(a) First, the short-length cylindrical base 13A is prepared.
(b) Next, a reflection sheet is attached as a reflective material layer 120 to the entire circumference of the outer circumferential side surface of the base 13A. On the other hand, the encoder pattern layer 130 in which the polarization filters 130a and 130b are disposed as described above is prepared. The encoder pattern layer 130 may have a protective layer such as a polyethylene terephthalate (PET) layer.
(c) Last, the encoder pattern 13B is attached to the outer side of the reflective material layer 120 by an adhesive agent such as a PVA-based adhesive agent, and accordingly, the encoder pattern portion 13 is formed.

In the example illustrated in the drawings, the width information portion 132 is disposed above and adjacent to the angle information portion 131. However, the positional relationship between the angle information portion 131 and the width information portion 132 is not limited to this, and the width information portion 132 may be disposed below the angle information portion 131.

The encoder pattern portion 13 is disposed below and adjacent to the reflection target 11 (FIG. 3). However, the positional relationship between the encoder pattern portion 13 and the reflection target 11 is not limited to this, and they may be disposed in other ways as long as the encoder pattern portion 13 is disposed coaxially with the central axis A of the support member 12 passing through the center O of the reflection target 11.

That is, the encoder pattern portion 13 may be disposed above the reflection target 11. The encoder pattern portion 13 and the reflection target 11 may be disposed away from each other.

The distance-measuring device 14 is a digital metering rod. The distance-measuring device 14 is configured to be extensible and contractible in the direction of the double-headed arrow B in FIG. 3. By setting a point R on the central axis A of the support member 12 as a base point, the distance-measuring device 14 is attached to the support member 12 turnably around a horizontal axis H1 passing through the point R in the direction of the double-headed arrow C in FIG. 2. The distance-measuring device 14 can measure a distance between the base point R and the tip end 14A, that is, a distance 1 between the base point R and the measurement point P, and outputs the measurement result to the module communication unit 19.

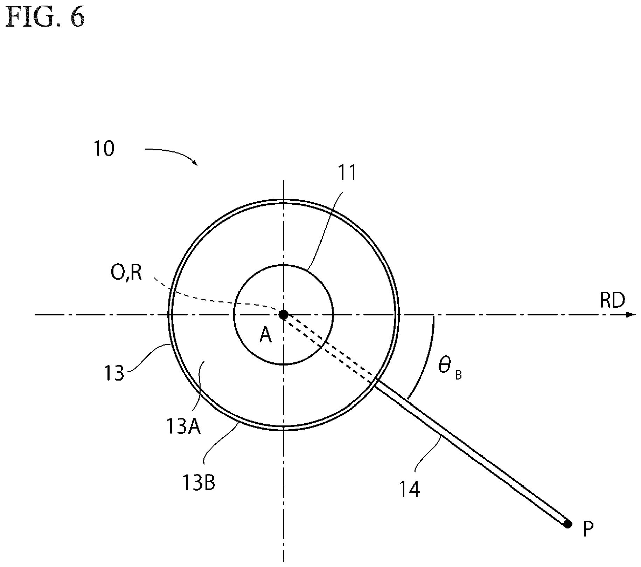

A distance d between the base point R of the distance-measuring device 14 and the center O of the reflection target 11 is known in advance. Further, an angle $\theta_B$ (refer to FIG. 6) of the distance-measuring device 14 around the central axis A of the support member 12 with respect to the reference direction RD of the encoder pattern 13B is measured at the time the distance-measuring device 14 is fitted to the support member 12, and is set as a known value.

Alternatively, it is also possible that the distance-measuring device 14 is attached rotatably around the central axis A of the support member 12, and a rotation angle measuring device such as a rotary encoder is attached to enable a measurement of the angle.

In this case, an angle around the central axis of the support member 12 between a direction corresponding to 0° of the rotation angle measuring device and the reference direction RD when the distance-measuring device 14 is fitted to the support member 12 is obtained when the distance-measuring device 14 is fitted, and set as a correction value in the rotation angle measuring device. In this way, the rotation angle measuring device 22 enables a measurement of an angle $\theta_B$ of the distance-measuring device 14 around the central axis A of the support member 12 with respect to the reference direction RD of the encoder pattern 13B. Measurement data of the rotation angle measuring device can be output to the module communication unit 19.

When outputting a measurement result of the distance 1 to the module communication unit 19, the distance-measuring device 14 also outputs the data on the distance d between the center O of the reflection target 11 and the base point R of the distance-measuring device 14 and the angle $\theta_B$ of the distance-measuring device 14 around the central axis A of the support member 12 to the module communication unit 19.

The tilt angle-measuring device 15 is a tilt sensor, and for example, a tilt sensor that makes detection light incident on a horizontal liquid surface and detects levelness based on a change in reflection angle of reflected light of the detection light, or an electronic bubble tube that detects a tilt based on a position change of sealed bubble, can be used.

The tilt angle-measuring device 15 is attached to the distance-measuring device 14 so as to be parallel to the distance-measuring device 14. The tilt angle-measuring device 15 measures a tilt angle (that is, an angle in the vertical direction) $\phi$ of the distance-measuring device 14 with respect to a horizontal plane (plane H1-H2 in FIG. 3) of the distance-measuring device 14, and outputs the measurement result to the module communication unit 19.

The level 16 is a bubble tube formed by sealing a bubble and liquid in a columnar container. The level 16 is attached to the support member 12 so that a vertical state of the central axis A of the support member 12 can be ensured by keeping the bubble positioned within a central gauge line.

The control unit 17 is, for example, an MPU (Micro Processing Unit). The control unit 17 is connected to the distance-measuring device 14, the tilt angle-measuring device 15, the input unit 18, and the module communication unit 19. The connection may be made by means of wireless communication. The control unit 17 performs measurements by the distance-measuring device 14 and the tilt angle-measuring device 15 in accordance with a command to make a measurement, etc., input from the input unit 18. In addition, the control unit 17 transmits measurement data to the surveying instrument 50 through the module communication unit 19.

The input unit 18 is, for example, a button switch, and turns the power supply ON/OFF and inputs commands for measurement start, etc., by being pressed by an operator U.

The module communication unit 19 enables wireless communication between the measurement module 10 and the surveying instrument 50. The module communication unit 19 transmits measurement data acquired by the measurement module 10 to the communication unit 57 of the surveying instrument 50.

Herein the measurement data includes a distance 1 between the base point R of the distance-measuring device 14 and the measurement point P acquired by the distance-measuring device 14, a tilt angle $\phi$ of the distance-measuring device 14 with respect to a horizontal plane acquired by the tilt angle-measuring device 15, a distance d known in advance between the center O of the reflection target 11 and the base point R of the distance-measuring device 14, and an angle $\theta_B$ of the distance-measuring device 14 around the central axis A of the support member 12 with respect to the reference direction RD of the encoder pattern 13B.

The control unit 17, the input unit 18, and the module communication unit 19 may be attached to the support member of the measurement module 10 in an appropriate manner as in the illustrated example, or may be configured as a separate body like a remote controller.

Next, the surveying instrument 50 is described.

As illustrated in FIG. 2, the surveying instrument 50 is installed at a known point by using a tripod, and includes, in order from the lower side, a leveling unit, a base portion provided on the leveling unit, a bracket portion 2a that rotates horizontally on the base portion, and a telescope 2b that rotates vertically at the center of the bracket portion 2a.

The surveying instrument 50 is a total station. As illustrated in FIG. 1, the surveying instrument 50 includes an EDM 51, a horizontal angle detector 52, a vertical angle detector 53, a camera 55, a tracking unit 56, a communication unit 57, a horizontal rotation driving unit 58, a vertical rotation driving unit 59, a storage unit 61, an input unit 62, a display unit 63, an arithmetic control unit 64, and a reading light transmission unit 69. The EDM 51, the horizontal angle detector 52, the vertical angle detector 53, the camera 55, the tracking unit 56, the communication unit 57, the horizontal rotation driving unit 58, the vertical rotation driving unit 59, the storage unit 61, the input unit 62, the display unit 63, and the reading light transmission unit 69 are connected to the arithmetic control unit 64.

The horizontal angle detector 52, the vertical angle detector 53, the communication unit 57, the horizontal rotation driving unit 58, the vertical rotation driving unit 59, the storage unit 61, and the arithmetic control unit 64 are housed in the bracket portion 2a. The input unit 62 and the display unit 63 are provided outside the bracket portion 2a. The EDM 51 and the tracking unit 56 are housed in the telescope 2b, and the camera 55 is attached to an upper portion of the telescope 2b.

The EDM 51 includes a light emitting element, a distance-measuring optical system, and a light receiving element. The EDM 51 measures a distance to the reflection target 11 by emitting distance-measuring light from the light emitting element and receiving reflected light from the reflection target 11 by the light receiving element.

The horizontal angle detector 52 and the vertical angle detector 53 are rotary encoders, and detect rotation angles around rotation axes of the bracket portion 2a and the telescope 2b respectively driven by the horizontal rotation driving unit 58 and the vertical rotation driving unit 59 described later, and obtains a horizontal angle and a vertical angle of a collimation optical axis A.

The EDM 51, the horizontal angle detector 52, and the vertical angle detector 53 constitute a survey unit 54 that is an essential portion of the surveying instrument 50.

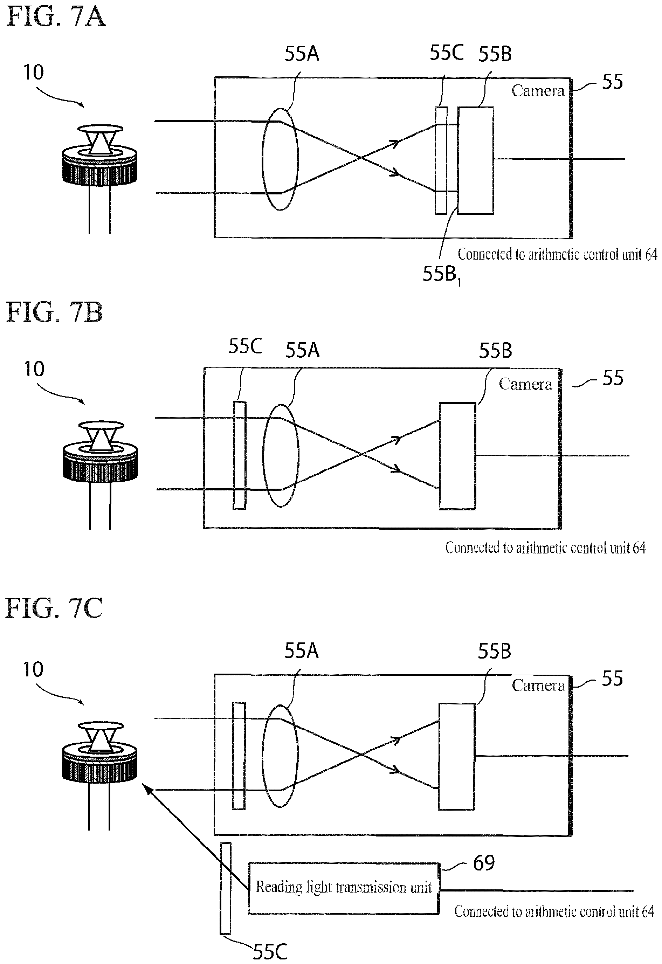

The camera 55 functions as an information acquiring unit, and includes an optical system 55A, an image pickup device 55B, and a polarization filter 55C as illustrated in FIGS. 7.

The optical system 55A is an optical system publicly known as components of a camera. The image pickup device 55B is an image sensor, for example, a CCD sensor, a CMOS sensor, etc. The polarization filter 55C is a polarization filter that transmits a polarization component in the second direction as with the second polarization filter (130b) of the encoder pattern portion 13.

The polarization filter 55C is disposed on an optical path of light that is output from the reading light transmission unit 69, reflected by the encoder pattern 13, and enters a light receiving surface $55B_1$ of the image pickup device 55B. Therefore, the polarization filter 55C may be disposed in front of the light receiving surface $55B_1$ of the image pickup device 55B as illustrated in FIG. 7A, or may be disposed in front of the optical system 55A as illustrated in FIG. 7B. Alternatively, as illustrated in FIG. 7C, the polarization filter 55C may be disposed in front of the reading light transmission unit 69.

The camera 55 receives light by the image pickup device 55B through the optical system 55A of the camera 55, and acquires an image of the light as an image. Therefore, the camera 55 optically acquires information represented by the encoder pattern 13B as an image. The image pickup device 55B is connected to the arithmetic control unit 64, and converts the acquired image into digital data and outputs the digital data to the arithmetic control unit 64.

The camera 55 is attached to an upper portion of the telescope 2b so as to become parallel to the telescope 2b. The camera 55 is configured to be collimated to the encoder pattern portion 13 whose positional relationship with the reflection target 11 is fixed, in a state where the telescope 2b is collimated to the reflection target 11. Therefore, it is also possible that the camera 55 includes a rotation driving unit, and is configured turnably upward, downward, leftward, and rightward when capturing an image according to control of the arithmetic control unit 64.

The reading light transmission unit 69 includes a light emitting element, shares the optical system with the EDM 51, and outputs light toward the encoder pattern portion 13.

The tracking unit 56 includes a light emitting element for emitting tracking light, a light receiving element that is an image sensor, for example, a CCD sensor, a CMOS sensor, etc., and a tracking optical system that shares optical elements with the distance-measuring optical system. The tracking unit 56 is configured to project infrared laser light with a wavelength different from that of the distance-measuring light onto a tracking object (target), receive reflected light from the tracking object, and track the tracking object based on the light receiving result.

The tracking unit 56 is not essential and can be omitted when a tracking function is not required. When the tracking unit 56 is provided, it is also possible that the function of the camera 55 is incorporated in the tracking unit 56, and the independent camera 55 can be omitted.

The communication unit 57 enables wireless communication with the module communication unit 19 of the measurement module 10. The communication unit 57 receives measurement data from the module communication unit 19.

The horizontal rotation driving unit 58 and the vertical rotation driving unit 59 are motors, and are controlled by the arithmetic control unit 64 to respectively rotate the bracket portion 2a horizontally and the telescope 2b vertically.

The storage unit 61 includes a ROM (Read Only Memory) and a RAM (Random Access Memory).

In the ROM, programs and data necessary for operation of the entire surveying instrument 50 are stored. These programs are read by the RAM and started by the arithmetic control unit 64 to perform various processings of the surveying instrument 50.

The RAM temporarily holds data for operating three-dimensional position coordinates of the center point O of the reflection target, three-dimensional position coordinates of the measurement point P, and the direction angle $\theta_T$ of the surveying instrument.

The input unit 62 is, for example, an operation button. An operator can input commands to be executed by the surveying instrument 50 to the input unit 62 and select settings.

The display unit 63 is, for example, a liquid crystal display, and displays various types of information such as measurement results and operation results in response to a command of the arithmetic control unit 64. In addition, the display unit 63 displays setting information for inputs by an operator and commands input by an operator from the input unit 62.

The input unit 62 and the display unit 63 may be integrally configured as a touch panel display.

The arithmetic control unit 64 includes a CPU (Central Processing Unit) and a GPU (Graphical Processing Unit). The arithmetic control unit 64 performs various processing for fulfilling functions of the surveying instrument 50. In detail, the arithmetic control unit 64 controls the rotation driving units 58 and 59 and performs automatic tracking by the tracking unit 56. In addition, the arithmetic control unit 64 controls the EDM 51 and acquires distance measurement data of the reflection target. Additionally, the arithmetic control unit 64 acquires angle measurement data of the reflection target 11 from values detected by the horizontal angle detector 52 and the vertical angle detector 53. In addition, the arithmetic control unit 64 calculates three-dimensional position coordinates of the center O of the reflection target 11 from the distance measurement data and the angle measurement data. Further, the arithmetic control unit 64 controls the camera 55 to acquire an image.

The arithmetic control unit 64 includes, as functional units, an encoder pattern reading unit 65, a direction angle calculation unit 66, and a measurement point coordinate calculation unit 67.

The encoder pattern reading unit 65 recognizes the encoder pattern from an image acquired by the camera 55, and converts the encoder pattern 13B into a bit pattern.

The direction angle calculation unit 66 calculates a direction angle $\theta_T$ of the surveying instrument 50 with respect to the reference direction RD of the encoder pattern 13B based on the reading result of the encoder pattern reading unit 65.

The measurement point coordinate calculation unit 67 calculates three-dimensional position coordinates P (X, Y, Z) of the measurement point P from three-dimensional position coordinates O ($x_P$, $y_P$, $z_P$) of the center O of the reflection target 11 calculated from measurement data of the measurement module 10, the direction angle $\theta_T$ of the surveying instrument 50 with respect to the reference direction RD of the encoder pattern 13B, the distance measurement data, and the angle measurement data.

Each functional unit may be configured by software, or may be configured by a dedicated arithmetic circuit. A functional unit configured by software and a functional unit configured by a dedicated arithmetic circuit may be mixed.

1-2. Survey of measurement point

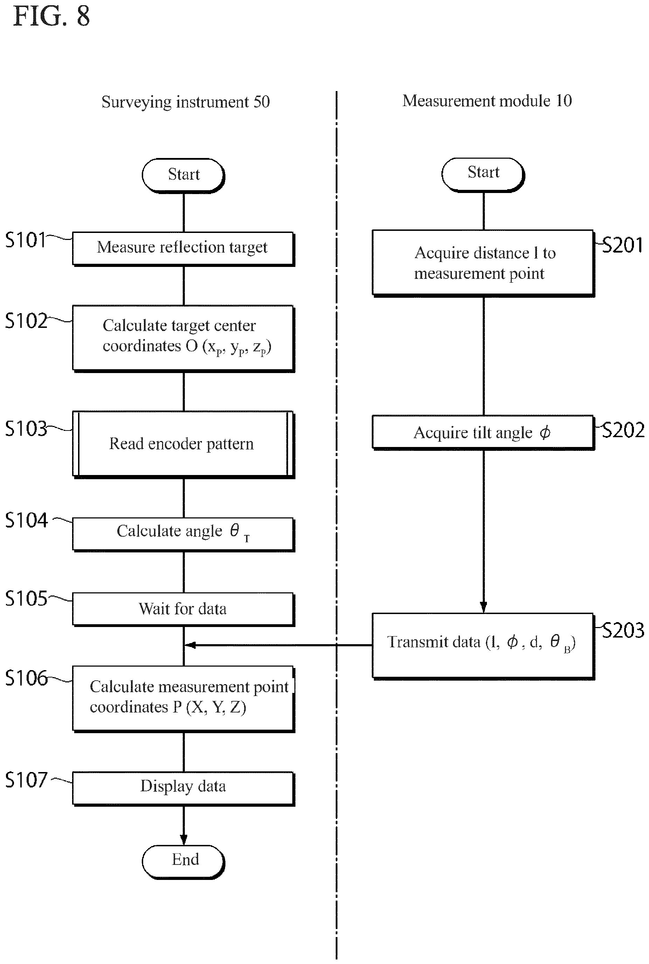

FIG. 8 is a flowchart of operations of the surveying instrument 50 and the measurement module 10 in a case where a measurement point P not in sight from the surveying instrument 50 is surveyed by using a survey system 100 according to the present embodiment.

First, when a measurement starts in a mode for measuring a measurement point that is not in sight in response to an operation such as pressing a measurement start button, in Step S101, the survey unit 54 measures the center O of the reflection target 11.

Specifically, the EDM 51 measures a distance from the surveying instrument 50 to the reflection target 11 by transmitting distance-measuring light toward the reflection target 11 and receiving reflected distance-measuring light reflected from the reflection target 11. In addition, the horizontal angle detector 52 and the vertical angle detector 53 measure angles of the reflection target 11.

Next, in Step S102, the arithmetic control unit 64 calculates coordinates O ($x_P$, $y_P$, $z_P$) of the center O of the reflection target 11 by a publicly known method based on the distance data and the angle data acquired in Step S101. The calculation result is stored in the storage unit 61.

Next, in Step S103, the camera 55 captures a landscape image in a collimation direction of the telescope 2b and reads the encoder pattern 13B of the measurement module 10. Reading of the encoder pattern 13B will be described later.

Next, in Step S104, the arithmetic control unit 64 calculates a direction angle $\theta_T$ of the surveying instrument 50 with respect to the reference direction RD of the encoder pattern 13B based on the reading result of the encoder pattern portion 13 in Step S103. The calculation result is stored in the storage unit 61.

Next, in Step S105, the arithmetic control unit 64 waits for reception of the measurement data from the measurement module 10.

On the other hand, in the measurement module 10, a measurement is started in response to an operation such as pressing a measurement start button of the measurement module by an operator U on the measurement module side according to a cue, etc., from the operator on the surveying instrument side. Next, in Step S201, the distance-measuring device 14 measures a distance 1 from the base point R of the distance-measuring device 14 to the measurement point P, and outputs the measurement result data to the module communication unit 19 together with data on the distance d between the center O of the reflection target 11 and the base point R of the distance-measuring device 14, and the angle $\theta_B$ around the central axis of the support member 12.

Next, in Step S202, the tilt angle-measuring device 15 measures a tilt angle $\phi$ of the distance-measuring device 14 with respect to a horizontal plane passing through the base point R of the distance-measuring device 14, and outputs the measurement result data to the module communication unit 19.

The processing in Steps S201 and S202 do not necessarily have to be performed in this order, and may be simultaneously performed or performed in the reverse order.

Next, in Step S203, the module communication unit 19 transmits, as measurement data of the measurement module 10, the distance 1 between the base point R of the distance-measuring device 14 and the measurement point P, the tilt angle $\phi$ of the distance-measuring device 14 with respect to the horizontal plane, the distance d between the center O of the reflection target 11 and the base point R of the distance-measuring device 14, and the angle $\theta_B$ of the distance-measuring device 14 around the central axis A of the support member 12 with respect to the reference direction RD of the encoder pattern 13B, to the surveying instrument 50.

In a case where the angle $\theta_B$ of the distance measuring device 14 around the central axis A of the support member 12 with respect to the reference direction RD of the encoder pattern 13B is not fixed but measurable by the rotation angle measuring device, before Step S203, the angle $\theta_B$ is measured and output to the module communication unit 19.

Concerning the data transmission in Step S203, all measurement data do not necessarily have to be transmitted after the processing of both Steps S201 and S202, and it is also possible that data acquired in each step is transmitted to the surveying instrument 50 after each Step S201 or S202 is finished.

Then, when the measurement data transmitted from the measurement module 10 is received by the surveying instrument 50, in Step S106, the arithmetic control unit 64 calculates measurement point coordinates P (X, Y, Z) based on the measurement data and the measurement point direction angle $\theta_T$. Details of the calculation of the measurement point coordinates will be described later.

Next, in Step S107, in the surveying instrument 50, the measurement point coordinates P (X, Y, Z) obtained by the operations are displayed on the display unit 63, and then the measurement is ended.

1-3. Angle detection (encoder pattern reading)

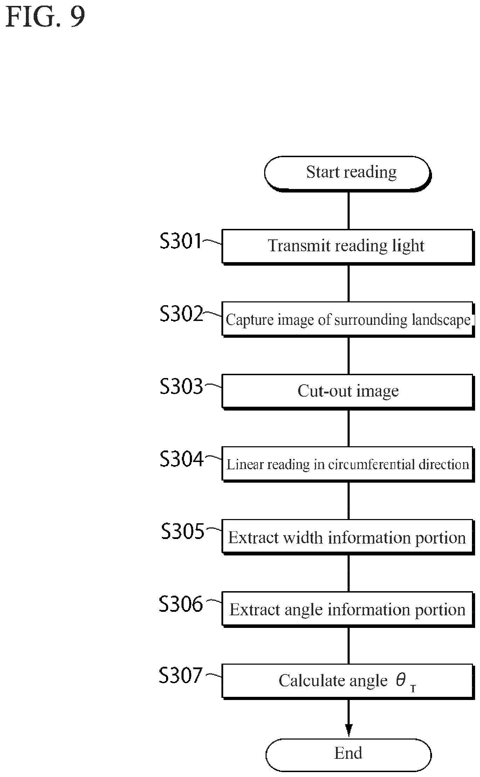

FIG. 9 is a flowchart of angle detection in the angle detection system 90, and illustrates an example of processing corresponding to Steps S103 and S104 described above. In Step S103, when encoder pattern reading starts, the surveying instrument 50 executes the following operations.

When angle detection is started, in Step S301, the reading light transmission unit 69 transmits reading light. Next, in Step S302, the camera 55 captures a landscape image around the encoder pattern portion 13.

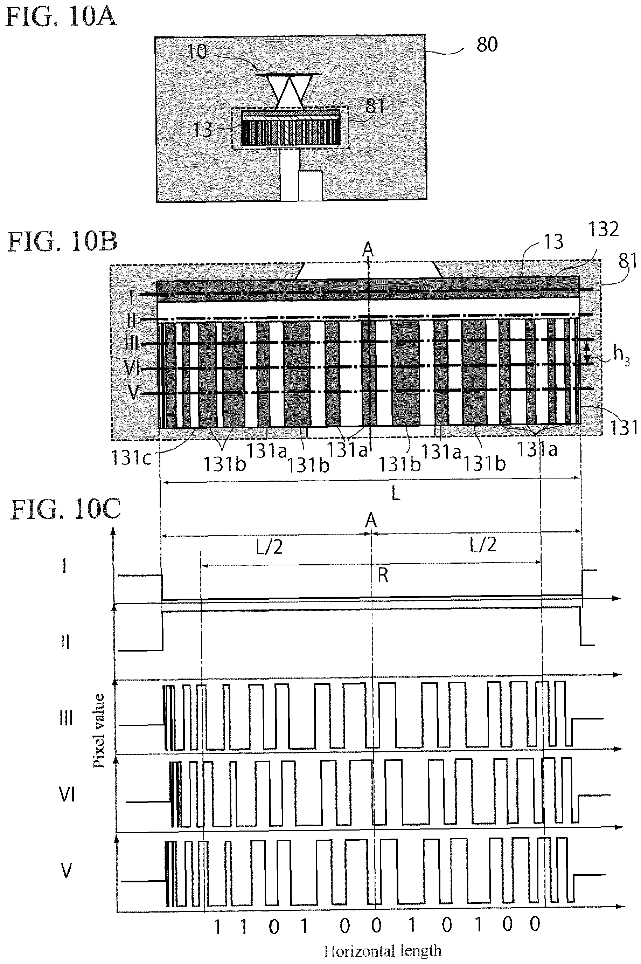

Next, in Step S303, the encoder pattern reading unit 65 recognizes and cuts out a range 81 of the encoder pattern portion 13 into a rectangular shape from the acquired image (FIG. 10B).

Next, in Step S304, the encoder pattern reading unit 65 linearly reads the image of the range 81 of the encoder pattern portion 13 cut out in Step S302 in the circumferential direction of the encoder pattern 13B. For example, as illustrated in FIG. 10B, the image is linearly read at the positions I-V and converted into pixel values.

As described above, in front of the image pickup device 55B of the camera 55, the polarization filter 55C that is the same as the second polarization filter 130b is disposed. Therefore, in light transmitted from the reading light transmission unit 69 and reflected by the encoder pattern portion 13, a polarization component in the second direction is transmitted through the polarization filter 55C, however, lights of the other components are attenuated by the polarization filter 55C.

Therefore, lights reflected by the regions 131c and the second zone 132b that are made of the second polarization filter 130b are transmitted through the polarization filter 55C on the camera 55 side, and corresponding portions become bright images. On the other hand, lights reflected by the vertical lines 131a and 131b and the first zone 132a that are made of the first polarization filter are attenuated by the polarization filter 55C on the camera 55 side, so that corresponding portions become dark images.

The pixel value becomes smaller as the image becomes dark, and becomes larger as the image becomes bright. Therefore, the reading results at the respective positions I to V (hereinafter, referred to as "pixel rows I to V") can be expressed as illustrated in, for example, FIG. 10C.

For setting the reading intervals, for example, as illustrated in FIG. 10B, it is preferable that, from the image of the encoder pattern portion 13 obtained in advance in Step S301 and known information on the encoder pattern portion 13, the height $h_1$ (FIG. 4B) of the first zone 132a and the second zone 132b of the width information portion 132 and the height $h_2$ (FIG. 4B) of the vertical lines 131a and 131b in the image are roughly calculated, and the reading intervals are set to intervals $h_3$ smaller than the height $h_1$ and shorter than 1/2 of the height $h_2$. This enables reliable capture of the angle information portion 131 and the width information portion 132.

Next, in Step S305, from the reading result in Step S304, the reading result of the width information portion 132 is extracted. In detail, a portion with a pixel value smaller than a predetermined threshold is determined as a portion corresponding to the first polarization filter 130a, and a portion with a pixel value larger than the predetermined threshold is determined as a portion corresponding to the second polarization filter 130b, and a pixel row in which at least one of a dark portion and a bright portion continues for a certain length is determined as the reading result of the width information portion 132.

As a result, in FIG. 10C, it is found that the pixel rows I and II correspond to the width information portion 132. Then, from the detected width (diameter of the encoder pattern portion 13) L of the encoder pattern 13B, a position bisecting L is identified as a center position A of the encoder pattern 13B. By providing the width information portion 132, for example, even when the background of the encoder pattern portion 13 is dark or bright and the boundary between the image of the encoder pattern 13B and the background is unclear, the center position of the encoder pattern 13B can be accurately obtained as long as at least one of the zones can be detected.

Next, in Step S306, from the linear reading results in Step S304, correlations between pixel rows are calculated, and portions having correlations higher than a predetermined value are extracted as the reading results of the angle information portion 131.

In the example illustrated in FIG. 10C, pixel value patterns of the pixel rows III to V show high correlations. Therefore, the pixel rows III to V are found to be the results of reading of the angle information portion 131.

Then, the pixel values of the extracted pixel rows III to V are summed in the vertical direction and an average value is calculated. A portion at which the result of the average calculation is smaller than a predetermined threshold is determined as a vertical line, and widths of the respective vertical lines are obtained. Next, which of the narrow-width or wide-width vertical line the obtained width values correspond to is determined, and a vertical line with a narrow width is read as a bit "0," that is, the vertical line 131a, and a vertical line with a wide width is read as a bit "1," that is, the vertical line 131b. In this way, when a pixel value is calculated as a mean value from the plurality of pixel rows, for example, even when a positionally deviated pixel row is generated like the pixel row IV, influence from the positional deviation can be reduced, and reading accuracy can be improved.

Since the encoder pattern portion 13 is columnar, the vertical line widths $w_1$ and $w_2$ and the pitch p are observed to be narrower than the actual widths with increasing distance from the center. For example, in FIG. 4A, a width $w_{2a}$ of the wide-width vertical line $131b_1$ near the center is observed to be substantially equal to a width (actual width) $w_2$ of the wide-width vertical line 131b in FIG. 4B. On the other hand, a width $w_{2b}$ of the wide-width vertical line $131b_2$ most distant from the central portion is observed to be narrower than the actual width $w_2$. The same applies to the width $w_1$

and the pitch p. Therefore, it is preferable that the widths $w_1$ and $w_2$ are set so that ranges of changes in widths $w_1$ and $w_2$ do not overlap each other in consideration of the influence in which an observed width changes according to the disposition.

Next, the process shifts to Step S307, and the direction angle calculation unit 66 obtains an angle in the circumferential direction with respect to the reference direction RD of the encoder pattern 13B, that is, a direction angle $\theta_T$ of the surveying instrument 50 with respect to the reference direction RD by comparing a bit pattern in a region with a predetermined width R extending to the left and the right from a center set at the center position A of the encoder pattern 13B obtained in Step S305, that is, a bit pattern indicated by vertical lines of a predetermined bit number (for example, 10 lines) included in the region with the predetermined width R with the correlation between bit pattern and angle stored in the storage unit 61. (Then, the process shifts to Step S105.)

As another example of the reading operation of the encoder pattern 13B, the extraction of the angle information portion 131 in Step S306 may be performed by calculating a frequency spectrum of each pixel row from the results of linear image reading in the circumferential direction in Step S304 and, when a peak point in the spatial frequency matches the pitch p of the black vertical lines of the bit pattern, extracting the corresponding pixel row as data of the angle information portion 131.

The polarization filter 55C on the camera 55 may be made of not the second polarization filter 130b but the first polarization filter 130a of the encoder pattern 13. In this case, the pixel rows obtained by reading in Step S304 are inverted as compared with those in FIG. 10C, so that setting may be made so that a portion with a pixel value larger than the predetermined threshold is determined as a vertical line, and widths of the respective vertical lines are obtained.

It is also possible that the camera 55 is configured to have an automatic zooming function, and according to a size of the encoder pattern portion 13 recognized as a subject in Step S101, switch the focal length to the wide-angle side or the narrow-angle side so that the size of the image of the encoder pattern 13B becomes constant irrespective of the distance.

With this configuration, irrespective of the distance from the surveying instrument 50 to the measurement module 10, an image with a size suitable for reading of the encoder pattern 13B in Step S302 can be cut out, and occurrence of a reading error according to the distance can be prevented.

In this way, in the angle detection system 90 according to the present embodiment, the encoder pattern portion 13 is attached to a remote measuring object, the encoder pattern 13B is read by the camera 55 provided in the surveying instrument 50, and an angle is calculated by the arithmetic control unit 64 of the surveying instrument 50, so that the angle of the remote measuring object can be remotely measured without attaching a comparatively complicated angle detection device main body including a light emitting device and an image sensor, etc., to the measuring object.

Further, in the present embodiment, it is also possible that by making known or measureable in advance an angle between the reference direction of the encoder pattern 13B and the measuring object, an angle relationship between the surveying instrument and the measuring object is remotely measured.

When the above configuration applies to the angle detection system 90, the measurement module 10 including the distance-measuring device 14 serving as the measuring object includes the module communication unit 19, however, in a case where it is desired to simply know a direction angle $\theta_T$ of the surveying instrument with respect to the reference direction of the encoder pattern 13B, the angle measurement can be made in real time without requiring such a communication means.

The encoder pattern portion 13 is attached to an outer side of a measuring object, so that it is easily attached. Further, the encoder pattern portion 13 has a simple structure, and is easily manufactured.

1-4. Calculation of measurement point coordinates

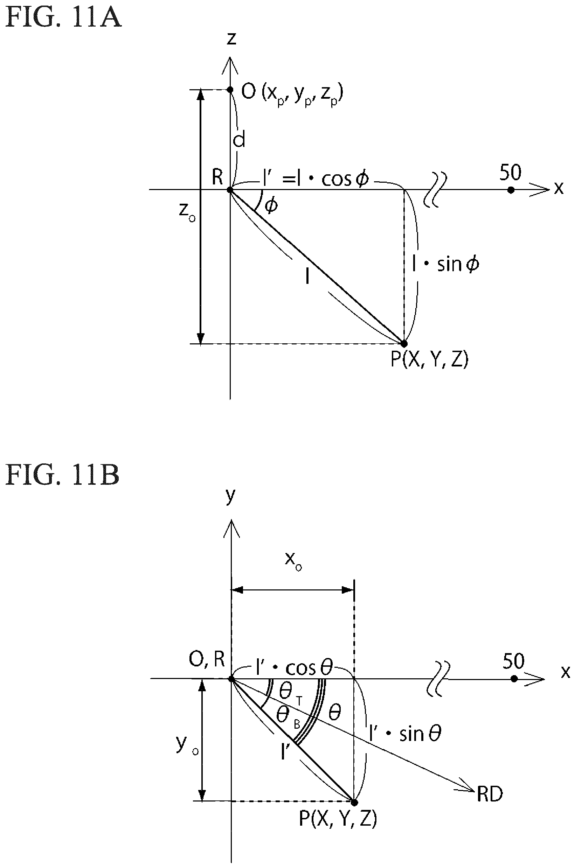

Next, a method for operating measurement point coordinates P (X, Y, Z) is described. FIG. 11A is a diagram illustrating a relationship between the center O of the reflection target 11, the base point R of the distance-measuring device 14, and the measurement point P in a vertical plane passing through the center O of the reflection target and the surveying instrument 50.

FIG. 11B is a diagram illustrating a relationship between the center O of the reflection target 11, the base point R of the distance-measuring device 14, and the measurement point P in the horizontal plane.

Here, the x axis indicates a horizontal direction extending in a direction from the base point R of the distance-measuring device 14 toward the surveying instrument 50, the y axis indicates a horizontal direction orthogonal to the x axis, and the z axis indicates the central axis A direction of the support member 12, that is, the vertical direction.

First, from FIG. 11A, a distance l' in the x-axis direction between the center O of the reflection target and the measurement point P is obtained according to Equation 1 by using the angle $\phi$ of the measurement point with respect to the x axis, and the distance 1 between the base point R of the distance-measuring device 14 and the measurement point P.

$$l' = l \cdot \cos \phi \; … \; \text{Equation 1}$$

A distance in the z-axis direction between the center O of the reflection target and the measurement point P is obtained according to d + l·sin $\phi$.

Next, from FIG. 10B, a direction angle $\theta$ of the measurement point P with respect to the x axis is obtained according to Equation 2 by using the direction angle $\theta_T$ of the surveying instrument with respect to the reference direction RD of the encoder pattern 13B and the direction angle $\theta_B$ of the distance-measuring device 14 with respect to the reference direction RD of the encoder pattern 13B.

$$\theta = \theta_T + \theta_B \; … \; \text{Equation 2}$$

Therefore, when offset values of the measurement point P with respect to the center O of the reflection target are defined as $(x_o, y_o, z_o)$, the values of $(x_o, y_o, z_o)$ can be respectively obtained according to Equations 3, 4, and 5.

$$x_O = l' = l \cdot \cos \phi \; … \; \text{Equation 3}$$

$$y_O = l' \cdot \sin \theta \; … \; \text{Equation 4}$$

$$z_O = d + l \cdot \sin \phi \; … \; \text{Equation 5}$$

From the offset values $(x_o, y_o, z_o)$ of the measurement point P obtained in this way and the coordinates O $(x_P, y_P, z_P)$ of the point O, coordinates P $(X, Y, Z)$ of the point P are obtained according to Equation 6.

$$P (X, Y, Z) = (x_P + x_O, y_P + y_O, z_P + z_O) \; … \; \text{Equation 6}$$

In this way, according to the survey system 100 according to the present embodiment, simultaneously with the measurement of the reflection target, measurements relating to a relationship between the horizontal angle, the vertical angle, and the distance between the reflection target and the measurement point are made, and based on the measurement results, a correction operation is automatically performed, so that even when the measurement point cannot be directly collimated from the surveying instrument, coordinates of the measurement point can be confirmed in real time at the survey site.

1-5. Modification 1

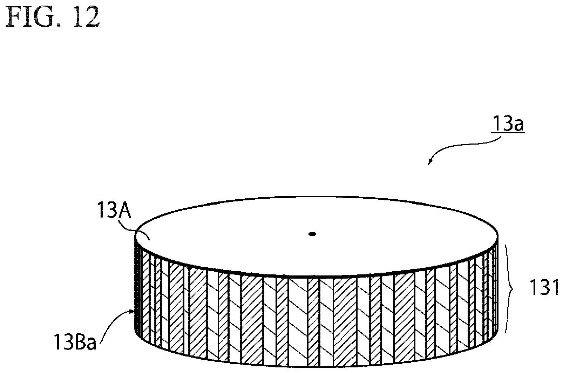

FIG. 12 is a perspective view of an encoder pattern portion 13a according to a modification of the embodiment described above. As illustrated in FIG. 12, the encoder pattern portion 13a does not include the width information portion 132. Thus, the width information portion 132 is not essential, and the width information portion 132 may not be provided. In this case, in Step S303, linear reading in the horizontal direction is performed at intervals shorter than a half of the height $h_2$ of the vertical lines 131a and 132b of the angle information portion 131, and from the reading results, left and right boundaries of the encoder pattern 13Ba are detected, and a center of the encoder pattern 13Ba can be obtained.

However, the provision of the width information portion 132 as illustrated in FIGS. 4 is advantageous because, for example, even when the background of the encoder pattern portion 13 is bright or dark and the boundary between the encoder pattern 13B and the background is unclear, the center position of the encoder pattern 13B can be accurately obtained.

2. Second Embodiment

2-1. Configuration of angle detection system

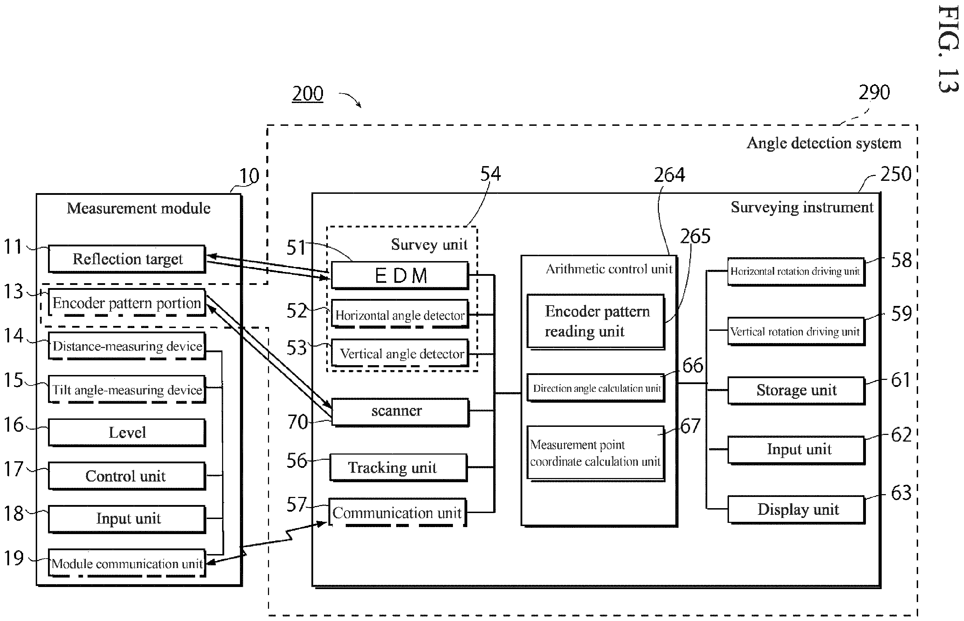

FIG. 13 is a configuration block diagram of a survey system 200 including an angle detection system 290 according to a second embodiment of the present invention.

The survey system 200 includes a measurement module 10 and a surveying instrument 250 as with the survey system 100. However, the surveying instrument 250 is different in that it does not include a camera that functions as an information acquiring unit, and instead of the camera, includes a scanner 70. Therefore, the angle detection system 290 consists of an encoder pattern portion 13 attached to a distance-measuring device 14, and the surveying instrument 250 including the scanner 70 and an arithmetic control unit 264.

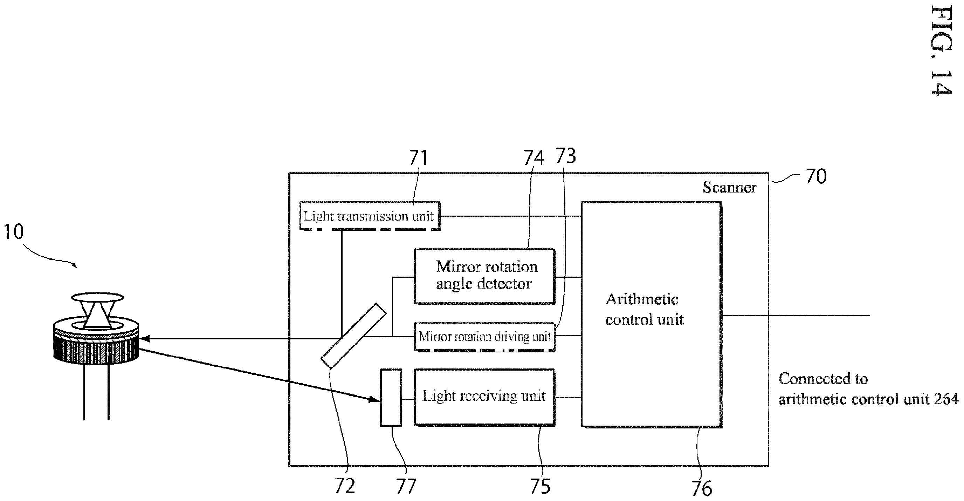

The scanner 70 includes, as illustrated in FIG. 14, a light transmission unit 71 that functions as a reading light transmission unit, a turning mirror 72, a mirror rotation driving unit 73, a mirror rotation angle detector 74, a light receiving unit 75, and a control unit 76, and is provided at, for example, an upper portion of the telescope 2b so as to be capable of performing scanning at least around the vertical axis.

The scanner 70 performs scanning by the scanning light a plurality of times in at least a horizontal direction (circumferential direction of the encoder pattern portion 13) by transmitting, for example, infrared laser light as scanning light from the light transmission unit 71 toward the encoder pattern portion 13, and rotationally driving the turning mirror 72 by the mirror rotation driving unit 73, receives reflected light from the encoder pattern 13B by the light receiving unit 75 such as a photodiode, and acquires a received light amount distribution as scan data. In other words, the scanner 70 optically acquires information represented by the encoder pattern as a received light amount distribution.

The control unit 76 of the scanner 70 is electrically connected to the arithmetic control unit 264 of the surveying instrument 250, and the scanner 70 performs scanning according to control of the arithmetic control unit 264.

The light receiving unit 75 is, for example, a photodiode. In front of a light receiving surface of the light receiving unit 75, a polarization filter 77 that is the same as the second polarization filter 130b constituting the encoder pattern 13B, and transmits the second polarization component and attenuates the other components, is provided.

However, as with the polarization filter 55C of the camera 55 according to the first embodiment, the disposition of the polarization filter 77 only has to be disposed on an optical path of light that is output from the light transmission unit 71, reflected by the encoder pattern 13, and enters the light receiving surface of the light receiving unit 75. Therefore, the polarization filter 77 may be disposed in front of an optical system (not illustrated) of the scanner 70, and may be disposed in front of the light transmission unit 71.

2-2. Angle detection (encoder pattern reading)

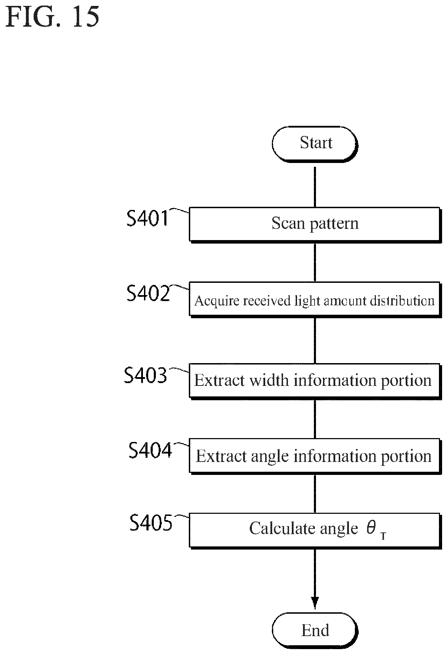

In detection of a direction angle $\theta_T$ of the surveying instrument 250 with respect to the reference direction RD of the encoder pattern 13B in an operation in a case where a measurement point P not visible from the surveying instrument 250 is surveyed by using the survey system 200, the angle detection system 290 performs the operation illustrated in FIG. 15 instead of Steps S301 to S307 of the first embodiment.

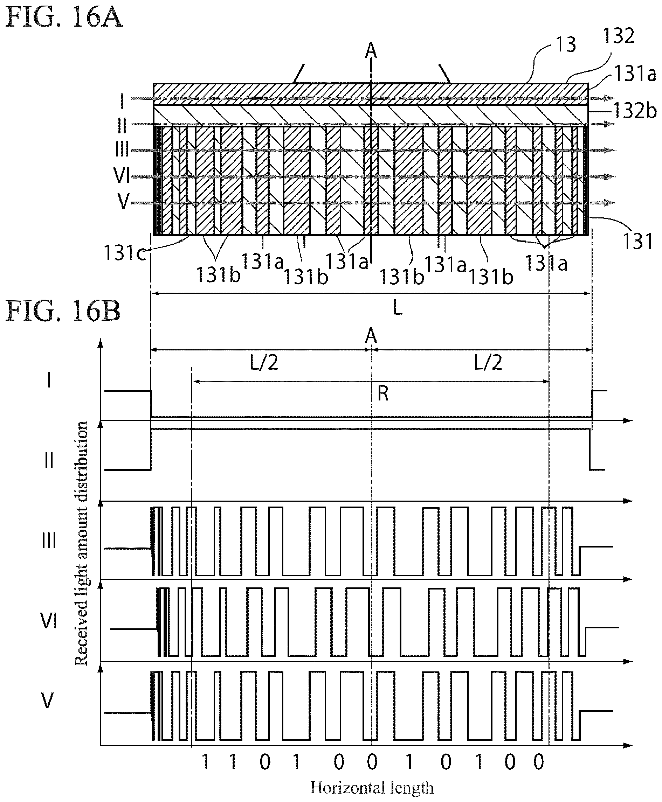

When angle detection is started, in Step S401, according to control of the encoder pattern reading unit 265, the scanner 70 scans light with respect to the encoder pattern portion 13 as illustrated in , for example, FIG. 16A.

Next, in Step S402, the light receiving unit of the scanner 70 acquires a received light amount distribution as scan data, and outputs the scan data to the encoder pattern reading unit 65.

Here, in light reflected by the encoder pattern 13B, lights reflected by the vertical lines 131a and 131b and the first zone 132a made of the first polarization filter 130a are polarization components in the first direction, and are attenuated by the polarization filter 77 of the scanner 70. On the other hand, lights reflected by the regions 131c and the second zone 132b made of the second polarization filter 130b are second polarization components orthogonal to the first direction, and are transmitted through the polarization filter 77 of the scanner 70.

As a result, received light amount distributions at the respective positions I to V are as illustrated in, for example, FIG. 16B. The obtained received light amount distributions behave in the same manner as those of the pixel rows in the first embodiment. Therefore, the following processing is the same processing as in Steps S305 to S307 in the first embodiment.

In Step S403, from the received light amount distribution acquired in Step S402, the reading result of the width information portion 132 is extracted.

Next, in Step S404, from the received light amount distribution acquired in Step S402, correlations of the received light amount distributions at the respective positions of the width are calculated, and portions having correlations higher than a predetermined value are extracted as the reading results of the angle information portion 131.

Next, in Step S405, the direction angle calculation unit 66 calculates a direction angle $\theta_T$ of the surveying instrument 50 with respect to the reference direction RD of the encoder pattern 13B by comparing a bit pattern included in a predetermined width R extending to the left and the right from a center set at the center position A of the encoder pattern 13B obtained in Step S403, that is, a bit pattern represented by vertical lines of a predetermined bit number (for example, 10 lines) included in the region with the predetermined width R with the correlation between bit pattern and angle stored in the storage unit 61 (then, the process shifts to Step S105).

In this way, even when the scanner 70 is used instead of the camera 55, the same effect as that of the angle detection system 90 of the first embodiment can be obtained. By using the scanner 70, the encoder pattern 13B is read by using reflected light of laser light, so that the received light amount increases, and a sufficient contrast can be obtained even in the measurement of a long distance or a situation where the amount of light is small.

When the scanner is used, reading is performed by a plurality of times of scanning, so that the reading accuracy can be improved by increasing the number of times of scanning according to a purpose.

3. Third Embodiment

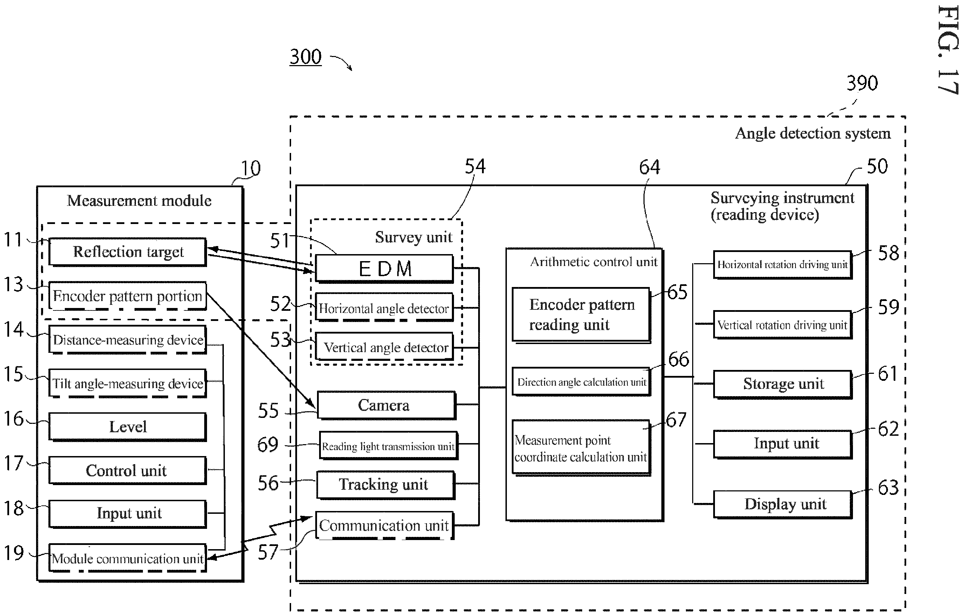

As illustrated in FIG. 17, an angle detection system 390 according to a third embodiment is provided in a survey system 300 that is the same as the survey system 100 according to the first embodiment, and includes the reflection target 11 as a component. The mechanical configuration of the survey system 300 is the same as that of the survey system 100, so that detailed description of the mechanical configuration is omitted.

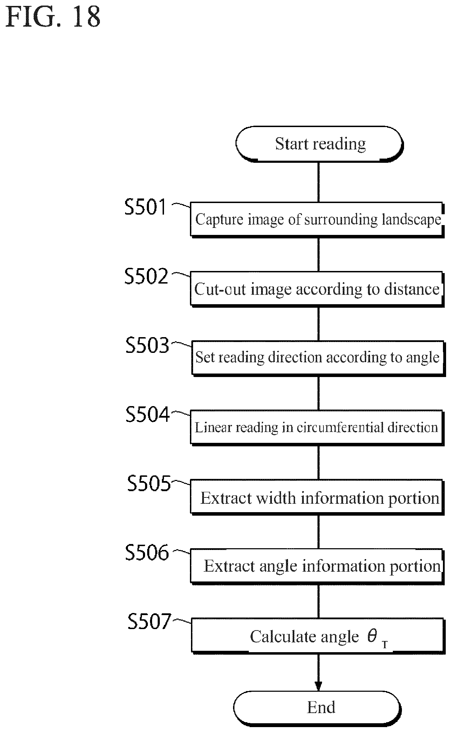

On the other hand, in the angle detection system 390 according to the third embodiment, an operation in angle detection is different from that in the angle detection system 90 as follows. FIG. 18 is a flowchart of angle detection in the angle detection system according to the third embodiment.

When angle detection is started, in Step S501, as in Step S301, the camera 55 acquires a landscape image 80 around the encoder pattern portion 13 including the encoder pattern portion 13.

Next, in Step S502, the encoder pattern reading unit 65 identifies a range 81 of the encoder pattern 13B in the image based on distance measurement data of the reflection target 11 acquired in Step S101 and known dimensions of the encoder pattern portion 13 stored in the storage unit 61, and cuts the range out into a rectangular shape. By this operation, an image can be cut out into an optimum size for encoder pattern reading, and reading accuracy is improved.

Next, in Step S503, a reading direction is set based on angle measurement data of the reflection target acquired in Step S101. This setting is made by considering an influence of a positional relationship in the vertical direction between the camera 55 and the encoder pattern portion 13 on the appearance of the encoder pattern portion 13 appearing on the image.

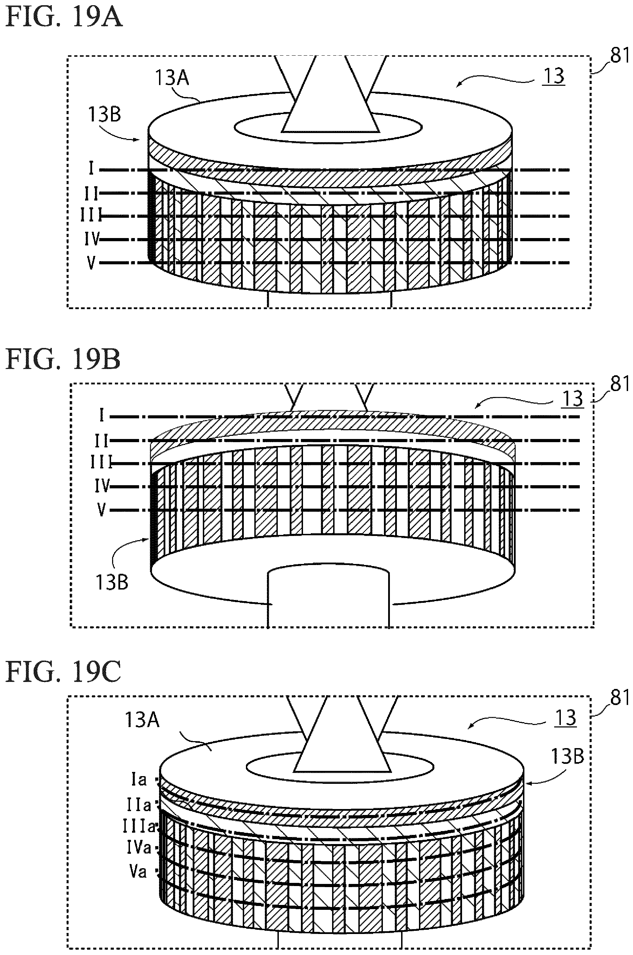

Specifically, when the camera 55 is at a position higher than the encoder pattern portion 13, as illustrated in FIG. 19A, the encoder pattern portion 13 is observed as a shape curved to protrude downward, and when the camera 55 is at a position lower than the encoder pattern portion 13, as illustrated in FIG. 17B, the encoder pattern portion 13 is observed as a shape curved to protrude upward. As a result, reading may become incomplete, and the width of a read pattern may differ.

Therefore, in advance, side surface shapes of the encoder pattern portion according to angle measurement data are calculated and the calculation results are stored in the storage unit 61, and in Step S503, based on angle measurement data acquired in Step S101, a side surface shape of the encoder pattern portion 13 in an acquired image is obtained, and according to the side surface shape, a reading direction is set so as to become parallel to an outer circumferential edge of the bottom surface or the upper surface. For example, when the image of the encoder pattern portion 13 is as illustrated in FIG. 19A, a reading direction is set so that reading along a curved line parallel to the outer circumferential edge of the bottom surface or the upper surface is performed as represented by Ia to Va in FIG. 19C.

Next, in Step S504, the encoder pattern reading unit 65 reads the image of the range 81 of the encoder pattern 13B cut out in Step S502, linearly in the circumferential direction of the encoder pattern portion 13. Here, the reading intervals $h_3$ are set to intervals $h_3$ smaller than the height $h_1$ and shorter than 1/2 of the height $h_2$ based on the distance measurement data of the reflection target 11 and known dimensions of the encoder pattern portion 13 stored in the storage unit 61 as in Step S303. By this setting, intervals that enable reliable capturing of the width information portion 132 and the angle information portion 131 can be accurately obtained, and reading accuracy is improved.

Next, in Step S505, from the reading results in Step S504, the reading results of the width information portion 132 are extracted. In detail, in a case where at least one of a black portion with a pixel value smaller than a predetermined threshold and a white portion with a pixel value larger than the predetermined threshold continues for a length corresponding to a diameter L of the encoder pattern portion calculated from the distance measurement data of the reflection target 11 acquired in Step S101 and known dimensions of the encoder pattern portion, a corresponding pixel row is determined to correspond to the width information portion 132.

Next, in Step S506, as in Step S305, from the reading results in Step S504, pixel rows corresponding to the angle information portion 131 are extracted.

Then, the process shifts to Step S507, and in the same manner as in Step S306, the direction angle calculation unit 66 obtains a direction angle $\theta_T$ of the surveying instrument 50 with respect to the reference direction RD of the encoder pattern 13B (then, the process shifts to Step S105).

In this way, in the angle detection system, by providing the reflection target and using a total station as a surveying instrument, an image can be cut out and setting of a reading direction, etc., can be performed based on a distance measured by the total station, so that reading accuracy is improved.

In the present embodiment, a configuration is also possible in which in addition to the camera 55, a narrow-angle camera sharing the optical system with the optical system of the survey unit is further provided as disclosed in Japanese Published Unexamined Patent Application No. 2016-138802, and according to a distance of the reflection target 11 calculated based on distance measurement data acquired by the survey unit, switching between the camera 55 and the narrow-angle camera can be made.

According to the configuration described above, irrespective of the distance from the surveying instrument 50 to the measurement module 10, an image with a size suitable for reading of the encoder pattern 13B in Step S302 can be cut out, and occurrence of a reading error according to the distance can be prevented.

As in the second embodiment, the scanner 70 may be used in the present embodiment instead of the camera 55.

4. Fourth Embodiment

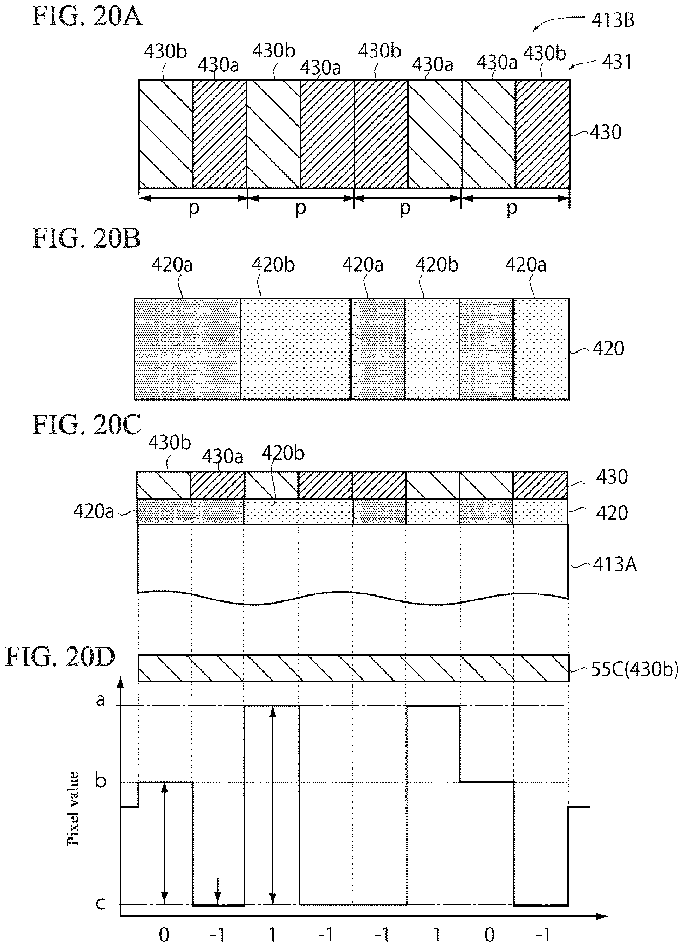

FIGS. 20 are diagrams describing a configuration of an angle information portion 431 of an encoder pattern of an angle detection system (not illustrated) according to a fourth embodiment. A mechanical configuration of the angle detection system according to the present embodiment is the same as that of the angle detection system 90 according to the first embodiment except for an angle information portion 431 of the encoder pattern, so that detailed description of the mechanical configuration is omitted.

As illustrated in FIG. 20C, the angle information portion 431 includes, in a cross-sectional structure, a reflective material layer 420 disposed on an outer circumferential side surface of a base 413A, and an encoder pattern layer 430 disposed on the reflective material layer 420.

As a material of the reflective material layer 420, a retroreflection sheet, etc., available on the market as in the first embodiment can be used. The reflective material layer 420 is configured by combining two kinds of reflective materials 420a and 420b. The reflective materials 420a and 420b are different in reflectance due to, for example, a difference in a resin layer protecting a surface, and for example, the former reflective material has a low reflectance, and the latter reflective material has a high reflectance.

On the other hand, in the encoder pattern layer 430, a first polarization filter 430a that transmits a polarization component in a first direction as in the first embodiment, and a second polarization filter 430b that transmits a polarization component in a second direction orthogonal to the first direction, are disposed at equal pitches p so as to continue with equal widths in the circumferential direction.

The positions of the respective polarization filters of the encoder pattern layer and the positions of the reflection sheets are matched with each other.

In front of the image pickup device 55B of the camera 55, as in the first embodiment, a polarization filter 55C that is the same as the second polarization filter 430b is disposed. As a result, pixel values of an image acquired by the camera 55 are pixel values as illustrated in Table 1 and FIG. 20D according to the combinations of the reflective materials of the reflective material layer 420 and the polarization filters of the encoder pattern layer 430.

[Table 1]

Table 1. Difference in pixel values depending on combination of reflective materials and polarization filters

| | Reflectance | First polarization filter 430a | Second polarization filter 430b |
|---|---|---|---|
| First reflective material 420a | High | c | a |
| Second reflective material 420b | Low | c | b |

In this way, according to combinations of the reflective materials and the polarization filters, three pixel values are indicated. Therefore, first, an M-sequence code pattern using three values of bits "-1," "0," and "1" is generated so as to correspond to an angle from the reference direction of the encoder pattern. Then, the encoder pattern 413B is configured by disposing the reflective materials 420a and 420b and the polarization filters 430a and 430b so as to represent a code pattern by assigning the bits "-1," "0," and "1" to the combinations of the reflective materials and the polarization films according to the three-pixel values.

Therefore, even when the encoder pattern is formed by the combinations of the reflective materials and the polarization filters, as in the first embodiment, the effect that enables a remote measurement of an angle of a measuring object can be obtained.

In addition, according to the present embodiment, two values can be assigned to one pitch, so that, as compared with a case where one value is assigned to one pitch, the reading width R can be made short even at the same resolution.

In other words, a region near the central axis A of the encoder pattern portion can be read, so that an influence based on the shape of the encoder pattern portion in which pitches and widths of the observed pattern vary according to the disposition is reduced. In addition, the pitches are not made smaller, so that a harmful influence on the reading accuracy caused by a finer pattern does not occur.

5. Fifth Embodiment

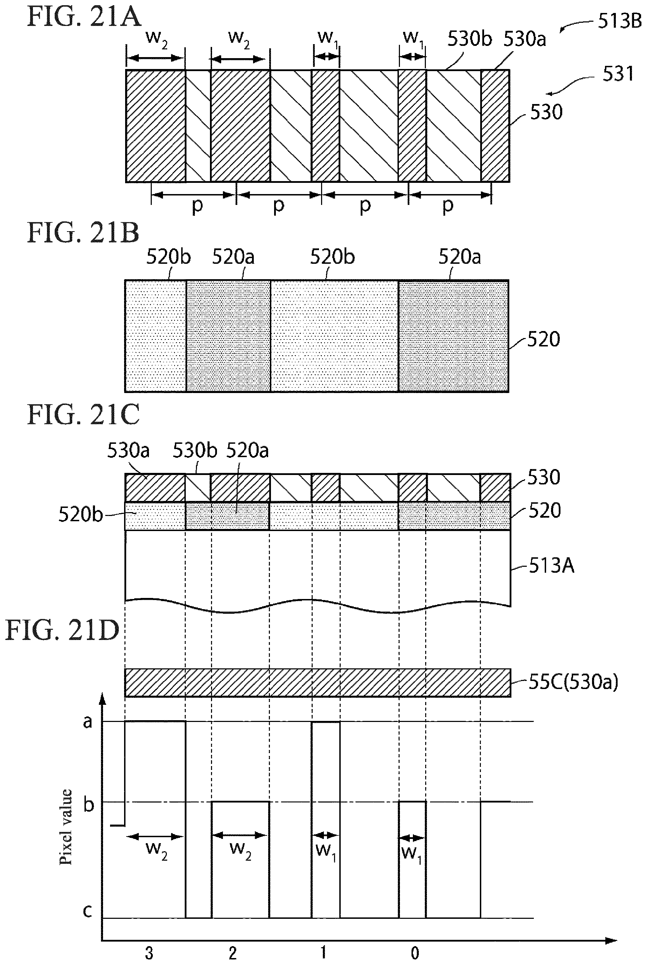

FIGS. 21 are diagrams describing a configuration of an angle information portion 531 of an encoder pattern 513B of an angle detection system (not illustrated) according to a fifth embodiment. A mechanical configuration of the angle detection system according to the present embodiment is the same as that of the angle detection system 90 of the first embodiment except for an angle information portion 531, so that detailed description of the mechanical configuration is omitted.

As illustrated in FIG. 21A, an encoder pattern layer 530 of the angle information portion 531 consists of a first polarization filter that transmits a polarization component in a first direction and attenuates a polarization component in a second direction orthogonal to the first direction, and a second polarization filter that transmits a polarization filter in a second direction and attenuates a polarization component in the first direction. In the encoder pattern layer 530, as in the encoder pattern layer 130 according to the first embodiment, first polarization filters 530a corresponding to narrow-width vertical lines with a width $w_1$ and first polarization filters 530a corresponding to narrow-width vertical lines with a width $w_2$ are disposed at equal pitches p, and a second polarization filter is disposed between the first polarization filters.

In addition, as illustrated in FIG. 21B, the reflective material layer 520 consists of two kinds of reflective materials 520a and 520b different in reflectance from each other as with the reflective material layer 420. For example, the former reflective material has a low reflectance, and the latter reflective material has a high reflectance.

Concerning the reflective materials, as illustrated in FIG. 21C, below the second polarization filter 530b and the first polarization filter 530a of the encoder pattern layer 530, either the reflective material 520a or 520b is disposed.

In front of the image pickup device 55B of the camera 55, contrary to the fourth embodiment, a polarization filter 55C that is the same as the first polarization filter 530a is disposed. As a result, pixel values of an image acquired by the camera 55 are pixel values as illustrated in Table 2 and FIG. 21D according to the combinations of the reflective materials of the reflective material layer 520 and the polarization filters of the encoder pattern layer 530.

[Table 2]

Table 2. Difference in pixel values depending on combination of reflective materials and polarization filters

| | Reflectance | First polarization filter 530a | Second polarization filter 530b |
|---|---|---|---|
| First reflective material 520a | High | a | c |
| Second reflective material 520b | Low | b | c |

The first polarization filters 530a disposed at equal pitches p have two-pixel values of a and b. The first polarization filters 530a have two widths of $w_1$ and $w_2$, so that there are four patterns of combinations of the widths and the pixel values as illustrated in FIG. 21D. Therefore, first, an M-sequence bit pattern using four values of bits "0," "1," "2," and "3" is generated so as to correspond to an angle from the reference direction of the encoder pattern. Then, the angle information portion 531 of the encoder pattern 513B is configured by disposing the reflective materials 520a and 520b and the polarization filters 530a and 530b so as to represent a bit pattern by assigning the four patterns of the combinations of the widths and pixel values of the first polarization filters 530a to the bits "0," "1," "2," and "3."

In this way, the angle information portion 531 of the encoder pattern can also be configured by combining polarization filters with different widths and reflective materials with different reflection intensities, and the same effect as that of the angle detection device according to the first embodiment can be obtained.

Although preferred embodiments of the present invention are described above, the embodiments and examples described above are just examples of the present invention, and the respective configurations can be combined based on knowledge of a person skilled in the art, and modes of such combination are also included in the scope of the present invention.

REFERENCE SIGNS LIST

11 Reflection target
14 Distance-measuring device (measuring object)
13, 13a Encoder pattern portion
13A, 413A, 513A Base
13B, 413B, 513B Encoder pattern
19 Module communication unit
50, 250 Surveying instrument
55 Camera (information acquiring unit)
55C Polarization filter
57 Communication unit
64, 264 Arithmetic control unit
69 Reading light transmission unit
70 Scanner (information acquiring unit)
71 Light transmission unit (reading light transmission unit) of scanner
77 Polarization filter
90, 290, 390 Angle detection system
120, 420, 520 Reflective material layer
130, 430, 530 Encoder pattern layer
130a, 430a, 530a First polarization filter
130b, 430b, 530b Second polarization filter
131, 431, 531 Angle information portion

**Claims**

1. An angle detection system comprising:

   an encoder pattern portion to be attached to a measuring object; and
   a surveying instrument, wherein
   the encoder pattern portion includes
   a columnar base and an encoder pattern provided on an outer circumferential surface of the base and representing an angle in a circumferential direction with respect to a predetermined reference direction,
   the encoder pattern includes a reflective material layer retroreflecting incident light and an encoder pattern layer disposed on a front surface of the reflective material layer, the encoder pattern layer includes a combination of a first polarization filter configured to transmit a polarization component in a first direction, and a second polarization filter configured to transmit a polarization component in a second direction different from the first direction, and
   the surveying instrument includes a reading light transmission unit configured to output reading light toward the encoder pattern, an information acquiring unit configured to optically acquire information represented by the encoder pattern, an arithmetic control unit configured to calculate an angle ($\theta_T$) of the surveying instrument with respect to the reference direction based on the information, and a first or second polarization filter disposed on an optical path of light to be output from the reading light transmission unit, reflected by the encoder pattern, and enter a light receiving surface of the information acquiring unit.

2. The angle detection system according to Claim 1, wherein
   the angle information portion represents a bit pattern by disposing the first and second polarization filters in the circumferential direction on the outer circumferential side surface of the encoder pattern portion, and
   the arithmetic control unit reads the optically acquired information in the circumferential direction of the encoder pattern, converts the reading result into a bit pattern, identifies a center position of the encoder pattern from the reading result, and calculates an angle by comparing the bit pattern included in a predetermined region centered at the center position with the correlation between bit pattern and angle set in advance.

3. The angle detection system according to Claim 1 or 2, wherein

the angle information portion is a barcode-like pattern formed by disposing the first polarization filter as vertical lines with two wide and narrow widths in the circumferential direction so as to represent a bit pattern generated by an M-sequence, and disposing the second polarization filter between the vertical lines.

4. The angle detection system according to any of Claims 1 to 3, wherein
the reflective material layer is configured by disposing first and second reflective materials with different reflectances in the circumferential direction, and
a bit pattern is represented by combinations of the first and second polarization filters and the first and second reflective materials.

5. The angle detection system according to any of Claims 1 to 4, wherein
the information acquiring unit is a camera configured to acquire information represented by the encoder pattern as an image.

6. The angle detection system according to any of Claims 1 to 4, wherein
the information acquiring unit is a scanner configured to acquire information represented by the encoder pattern as a received light amount distribution by transmitting scanning light to the encoder pattern and receiving reflected light from the encoder pattern.

7. The angle detection system according to any of Claims 1 to 6, wherein
the measuring object is attached at a predetermined angle ($\theta_B$) in the circumferential direction with respect to the reference direction, and the arithmetic control unit calculates an angle of the measuring object with respect to the surveying instrument based on the predetermined angle ($\theta_B$) and a read angle ($\theta_T$) of the encoder pattern.

8. An angle detection method for detecting an angle by using an encoder pattern portion including a columnar base and an encoder pattern disposed on an outer circumferential surface of the base and representing an angle in a circumferential direction with respect to a predetermined reference direction, and a surveying instrument including an information acquiring unit, comprising:

(a) a step of attaching the encoder pattern portion to the measuring object at a predetermined angle in the circumferential direction of the encoder pattern portion;
(b) a step of outputting reading light toward the encoder pattern;
(c) a step of optically acquiring information represented by the encoder pattern by the information acquiring unit; and
(d) a step of operating a direction angle of the surveying instrument with respect to the reference direction based on information acquired through the step (c), wherein

the encoder pattern includes a reflective material layer retroreflecting incident light and an encoder pattern layer disposed on a front surface of the reflective material layer, the encoder pattern layer includes a combination of a first polarization filter configured to transmit a polarization component in a first direction, and a second polarization filter configured to transmit a polarization component in a second direction different from the first direction, and
the surveying instrument includes a first or second polarization filter disposed on an optical path of light to be output from the reading light transmission unit, reflected by the encoder pattern, and enter the information acquiring unit.

FIG. 1

FIG. 2

FIG. 3

FIG. 4A

FIG. 4B

FIG. 4C

FIG. 5A

13A

FIG. 5B

13A

120

+

13B

130

FIG. 5C

13A　13

13B

FIG. 6

## FIG. 7A

55A  55C  55B

10

Camera  55

Connected to arithmetic control unit 64

55B₁

## FIG. 7B

55C  55A  55B

10

Camera  55

Connected to arithmetic control unit 64

## FIG. 7C

55A  55B

10

Camera  55

69

Reading light transmission unit

Connected to arithmetic control unit 64

55C

# FIG. 8

Surveying instrument 50

Measurement module 10

**Start**

**Start**

S101 — Measure reflection target

S201 — Acquire distance l to measurement point

S102 — Calculate target center coordinates O $(x_p, y_p, z_p)$

S103 — Read encoder pattern

S202 — Acquire tilt angle $\phi$

S104 — Calculate angle $\theta_T$

S105 — Wait for data

S203 — Transmit data $(l, \phi, d, \theta_B)$

S106 — Calculate measurement point coordinates P (X, Y, Z)

S107 — Display data

**End**

## FIG. 9

```
              ┌─────────────────────┐
              │    Start reading    │
              └─────────────────────┘
                         │
  S301─┤  ┌─────────────────────────────┐
          │    Transmit reading light    │
          └─────────────────────────────┘
                         │
  S302─┤  ┌─────────────────────────────────┐
          │ Capture image of surrounding landscape │
          └─────────────────────────────────┘
                         │
  S303─┤  ┌─────────────────────────────┐
          │         Cut-out image        │
          └─────────────────────────────┘
                         │
  S304─┤  ┌─────────────────────────────────┐
          │ Linear reading in circumferential direction │
          └─────────────────────────────────┘
                         │
  S305─┤  ┌─────────────────────────────────┐
          │  Extract width information portion │
          └─────────────────────────────────┘
                         │
  S306─┤  ┌─────────────────────────────────┐
          │  Extract angle information portion │
          └─────────────────────────────────┘
                         │
  S307─┤  ┌─────────────────────────────┐
          │   Calculate angle $\theta_T$  │
          └─────────────────────────────┘
                         │
                         ▼
              ┌─────────────────────┐
              │         End         │
              └─────────────────────┘
```

FIG. 10A

FIG. 10B

FIG. 10C

FIG. 11A

FIG. 11B

FIG. 12

FIG. 13

Angle detection system 290

Surveying instrument 250

Survey unit 54

EDM 51

Horizontal angle detector 52

Vertical angle detector 53

scanner 70

Tracking unit 56

Communication unit 57

Horizontal rotation driving unit 58

Vertical rotation driving unit 59

Storage unit 61

Input unit 62

Display unit 63

Arithmetic control unit 264

Encoder pattern reading unit 265

Direction angle calculation unit 66

Measurement point coordinate calculation unit 67

Measurement module 10

Reflection target 11

Encoder pattern portion 13

Distance-measuring device 14

Tilt angle-measuring device 15

Level 16

Control unit 17

Input unit 18

Module communication unit 19

200

FIG. 14

Scanner — 70

Light transmission unit — 71

Mirror rotation angle detector — 74

Mirror rotation driving unit — 73

Arithmetic control unit — 76

Light receiving unit — 75

72

77

10

Connected to arithmetic control unit 264

# FIG. 15

Start

S401 — Scan pattern

S402 — Acquire received light amount distribution

S403 — Extract width information portion

S404 — Extract angle information portion

S405 — Calculate angle $\theta_T$

End

FIG. 16A

FIG. 16B

1 1 0 1 0 0 1 0 1 0 0

Horizontal length

FIG. 17

# FIG. 18

```
                        ⌜ Start reading ⌝

S501 ──┤ Capture image of surrounding landscape │

S502 ──┤ Cut-out image according to distance │

S503 ──┤ Set reading direction according to angle │

S504 ──┤ Linear reading in circumferential direction │

S505 ──┤ Extract width information portion │

S506 ──┤ Extract angle information portion │

S507 ──┤ Calculate angle $\theta_T$ │

                        ⌜ End ⌝
```

## FIG. 19A

## FIG. 19B

## FIG. 19C

FIG. 20A

FIG. 20B

FIG. 20C

FIG. 20D

FIG. 21A

FIG. 21B

FIG. 21C

FIG. 21D

<table>
<tr><td colspan="2" style="text-align:center"><strong>INTERNATIONAL SEARCH REPORT</strong></td><td>International application No.<br>PCT/JP2019/029426</td></tr>
</table>

**A. CLASSIFICATION OF SUBJECT MATTER**
Int.Cl. G01C15/00(2006.01)i, G01C15/06(2006.01)i, G01D5/347(2006.01)i

According to International Patent Classification (IPC) or to both national classification and IPC

**B. FIELDS SEARCHED**

Minimum documentation searched (classification system followed by classification symbols)
Int.Cl. G01C15/00, G01C15/06, G01D5/347

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2016/0178406 A1 (WANG, Yong) 23 June 2016, paragraphs [0009], [0010], [0065]-[0084], [0093], [0098], [0107], fig. 1A-3B, 4D, 5E, 6N & WO 2014/058390 A1 & CN 104254755 A | 1-8 |
| PA | JP 2019-105515 A (TOPCON CORPORATION) 27 June 2019, entire text, all drawings (Family: none) | 1-8 |
| PA | JP 2019-20209 A (TOPCON CORPORATION) 07 February 2019, entire text, all drawings & US 2019/0018142 A1 (whole documents) & EP 3428575 A1 | 1-8 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October 2019 (15.10.2019) | 29 October 2019 (29.10.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2019/029426

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-145791 A (TOPCON CORPORATION) 12 August 2016, entire text, all drawings & US 2016/0216110 A1 (whole documents) & DE 102016200877 A & CN 105823471 A | 1-8 |
| A | JP 7-139942 A (WACOM CO., LTD.) 02 June 1995, entire text, all drawings (Family: none) | 1-8 |
| A | JP 60-80707 A (TSUMURA, Toshihiro, TSUMURA, Takeshi) 08 May 1985, entire text, all drawings (Family: none) | 1-8 |
| A | US 2009/0024325 A1 (SCHERZINGER, Bruno M.) 22 January 2009, whole documents (Family: none) | 1-8 |

Form PCT/ISA/210 (continuation of second sheet) (January 2015)

**EP 3 832 258 A1**

## REFERENCES CITED IN THE DESCRIPTION

**Patent documents cited in the description**

- JP H05172588 B
- JP 2016138802 A